# EUROPÄISCHE PATENTSCHRIFT

(11) **EP 3 350 253 B1**
(45) Veröffentlichungstag und Bekanntmachung des Hinweises auf die Patenterteilung: **09.10.2019**
(21) Anmeldenummer: 16820244.8
(22) Anmeldetag: 20.12.2016
(51) Int. Cl.: C08J 9/08, C08J 9/00, B29C 44/18, B62D 29/00

(54) **ORGANISCHE CARBONATE ALS TREIBMITTEL**
ORGANIC CARBONATES AS BLOWING AGENTS
CARBONATES ORGANIQUES UTILISÉS COMME AGENT D'EXPANSION

(30) Priorität: 22.12.2015 DE 102015226496
(43) Veröffentlichungstag der Anmeldung: 25.07.2018
(73) Patentinhaber: Henkel AG & Co. KGaA, 40589 Düsseldorf (DE)
(72) Erfinder: POELLER, Sascha, 40589 Düsseldorf (DE); SCHÖNFELD, Rainer, 40627 Düsseldorf (DE); BACHON, Thomas, 40597 Düsseldorf (DE); RAPPMANN, Klaus, 69469 Weinheim-Rittenweier (DE); KOHLSTRUNG, Rainer, 68723 Plankstadt (DE); PROST-BOUCLE, Constance, 69003 Lyon (FR)
(86) Internationale Anmeldenummer: PCT/EP2016/081948
(87) Internationale Veröffentlichungsnummer: WO 2017/108809

(56) Entgegenhaltungen:
- WO-A1-2015/140282
- US-A- 2 628 945
- DATABASE WPI Week 201401 Thomson Scientific, London, GB; AN 2013-W79233 XP002766486, -& JP 2013 249454 A (OSAKA GAS CO LTD) 12. Dezember 2013 (2013-12-12)

## Beschreibung

Die vorliegende Anmeldung betrifft eine thermisch expandierbare Zusammensetzung, die mindestens eine organische Verbindung umfassend mindestens eine cyclische Carbonatgruppe als Treibmittel, mindestens einen Katalysator für das Treibmittel, mindestens ein reaktives Bindemittel und mindestens einen Härter und/oder Beschleuniger umfasst, Formkörper, die diese Zusammensetzung enthalten, sowie ein Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung derartiger Formkörper.

Moderne Fahrzeuge und Fahrzeugteile weisen eine Vielzahl von Hohlräumen auf, die abgedichtet werden müssen, um den Eintritt von Feuchtigkeit und Verschmutzungen zu verhindern, da diese zur Korrosion an den entsprechenden Karosserieteilen von innen heraus führen kann. Dies trifft insbesondere auf moderne selbst tragende Karosseriekonstruktionen zu, bei denen eine schwere Rahmenkonstruktion durch leichtgewichtige, strukturfeste Rahmengerüste aus vorgefertigten Hohlraumprofilen ersetzt wird. Derartige Konstruktionen weisen systembedingt eine Reihe von Hohlräumen auf, die gegen das Eindringen von Feuchtigkeit und Verschmutzungen abgedichtet werden müssen. Derartige Abdichtungen dienen weiterhin dem Zweck, die Weiterleitung von Luftschall in derartigen Hohlräumen zu vermeiden und somit unangenehme Fahrzeuglauf- und Windgeräusche zu mindern und somit den Fahrkomfort im Fahrzeug zu steigern.

Schottteile, die eine abdichtende und/oder akustische Wirkung in derartigen Hohlräumen bewirken, werden häufig als "Hohlraumabschottung", "pillar filler", "baffles" oder "acoustic baffles" bezeichnet.

Sie bestehen in der Regel entweder vollständig aus thermisch expandierbaren Formkörpern oder aus Formkörpern, die einen Träger und in ihrem Peripheriebereich expandierbare polymere Zusammensetzungen enthalten. Diese Schottteile werden im Rohbau durch Einhängen, Einclipsen, Verschrauben oder Anschweißen an den offenen Baustrukturen befestigt. Nach dem Schließen der Baustrukturen im Rohbau und den weiteren Vorbehandlungen der Karosserie wird dann die Prozesswärme der Öfen zur Härtung der kathodischen Tauchlackierung ausgenutzt, um die Expansion des expandierbaren Teils des Schottteils auszulösen um somit den Querschnitt des Hohlraums abzudichten.

In modernen Fahrzeugen werden ferner immer häufiger metallische Leichtbauteile für eine konstant maßhaltige Serienfertigung mit vorgegebener Steifigkeit und Strukturfestigkeit benötigt. Insbesondere im Fahrzeugbau ist im Zuge der gewünschten Gewichtsersparnis Bedarf für metallische Leichtbauteile aus dünnwandigen Blechen, die trotzdem ausreichende Steifigkeit und Strukturfestigkeit besitzen. Auch hier kommen Formkörper aus thermisch expandierbaren Zusammensetzungen, die die nötigen Stützeigenschaften verleihen zum Einsatz.

Entsprechende thermisch expandierbare Zusammensetzung werden zum Beispiel in den Schriften WO 2008/034755, WO 2007/039309, WO 2015/140282, WO 2013/017536 und der deutschen Anmeldung 10 2012 221 192.6 beschrieben. Diese thermisch expandierbaren Zusammensetzungen finden auch Einsatz im Automobilbereich.

In derartigen expandierbaren Zusammensetzungen, wie beispielsweise Kautschuk-Vulkanisaten (Schwefel, Peroxid oder Benzochinondioxim) zur Abdichtung und Verklebung, Ethylenvinylacetatbasierten Hohlraumabschottungen, Epoxid-basierten Stützschäumen und expandierbaren Versiegelungsmassen im Automobilbau, werden heutzutage Treibmittel, wie beispielsweise ADCA (Azodicarbonamid), OBSH (4,4'-Oxybis(benzolsulfonylhydrazid)), DNPT (Dinitrosopentamethylentetramin), PTSS (p-Toluolsemicarbazid), BSH (Benzol-4-sulfonohydrazid), TSH (Toluol-4-sulfonohydrazid), 5-PT (5-Phenyltetrazol) und ähnliche, verwendet.

Diese Treibmittel haben den Nachteil, dass sie eine respiratorische Sensitivierung auslösen können, aus toxikologischer Sicht generell bedenklich sind, oder explosiv sind. Darüber hinaus entstehen bei ihrem Zerfall Nebenprodukte wie Ammoniak, Formamid, Formaldehyd oder Nitrosamine, die gemäß der Global Automotive Declarable Substance List (GADSL), IFA-KMR-List 08/2012 oder dem BGIA-Bericht "Index of hazardous substances 2012" im Automobilbau verboten sind. Zusätzlich ist bei der Verwendung von Treibmitteln der VOC-Gehalt (Gehalt flüchtiger organischer Verbindungen) sehr hoch. Daher wurden diese Treibmittel von der REACH-Verordnung als SVHCs eingestuft und werden mit großer Wahrscheinlichkeit verboten werden. Als Alternative zu diesen Treibmitteln können physikalische Treibmittel verwendet werden, die üblicherweise aus einem von einer Polymerhülle eingekapselten Gas oder leicht flüchtige Substanzen, wie Pentan, bestehen. Die Anwendung dieser Treibmittel ist jedoch nachteilig, da verhältnismäßig viel Treibmittelmasse eingesetzt werden muss, um hohe Expansionsraten zu erzielen. Ferner dürfen die expandierbaren Zusammensetzungen keine Bestandteile enthalten, die die Stabilität der Polymerhülle beeinflusst, da sonst Treibmittel vor dem zweckgemäßen Einsatz verdampft, welches zudem häufig leicht entzündlich ist.

Aufgabe der vorliegenden Erfindung war es daher, thermisch expandierbare Zusammensetzungen zur Verfügung zu stellen, welche lagerstabil sind und Treibmittel enthalten, die weder explosiv noch toxisch bedenklich sind und ferner gute Expansionsraten aufweisen.

Diese Aufgabe wird überraschender Weise durch thermisch expandierbare Zusammensetzungen gelöst, die
(1) mindestens eine organische Verbindung umfassend mindestens zwei cyclische Carbonatgruppen als chemisches Treibmittel,
(2) mindestens einen Katalysator für das Treibmittel,
(3) mindestens ein reaktives Bindemittel und
(4) mindestens einen Härter und/oder Beschleuniger umfassen,
wobei das reaktive Bindemittel vorzugsweise aus der Gruppe von Epoxiden, Kautschuken und peroxidisch vernetzbaren Polymeren, insbesondere Epoxiden ausgewählt wird.

Entsprechende Zusammensetzungen überwinden die bekannten Nachteile und weisen gleichzeitig hervorragende Expansion auf.

In US 2628945 wird die Verwendung von Ethylencarbonat als chemisches Treibmittel offenbart. Ferner wird in JP 2013 249454 die Verwendung von organischen Verbindungen umfassend mindestens zwei cyclische Carbonatgruppen als chemisches Treibmittel offenbart, jedoch ohne zusätzlichen Katalysator.

Daher betrifft die vorliegende Erfindung in einem ersten Aspekt eine thermisch expandierbare Zusammensetzung, enthaltend
(1) mindestens eine organische Verbindung umfassend mindestens zwei cyclische Carbonatgruppen als chemisches Treibmittel,
(2) mindestens einen Katalysator für das Treibmittel,
(3) mindestens ein reaktives Bindemittel und
(4) mindestens einen Härter und/oder Beschleuniger,
wobei das reaktive Bindemittel vorzugsweise aus der Gruppe von Epoxiden, Kautschuken und peroxidisch vernetzbaren Polymeren ausgewählt wird.

In einem weiteren Aspekt betrifft die Erfindung einen Formkörper, der eine erfindungsgemäße thermisch expandierbare Zusammensetzung aufweist.

Des Weiteren richtet sich die vorliegende Erfindung auf ein Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung einer hierin offenbarten thermisch expandierbaren Zusammensetzung oder Formkörper. Dabei wird das Aufschäumen der expandierbaren Zusammensetzung durch die mindestens eine organische Verbindung umfassend mindestens eine cyclische Carbonatgruppe hervorgerufen, vorzugsweise erfolgt eine Expansion der expandierbaren Zusammensetzung von mehr als 5 Vol.-%, vorzugsweise mehr als 50 Vol.-%, insbesondere mehr als 100 Vol.-%, jeweils bezogen auf die expandierbare Zusammensetzung vor der Expansion.

In einem noch anderen Aspekt betrifft die vorliegende Erfindung die Verwendung eines hierin beschriebenen Formkörpers zur akustischen Abdichtung von Hohlräumen in Bauteilen und/oder zur Abdichtung von Hohlräumen in Bauteilen gegen Wasser und/oder Feuchtigkeit oder zum Verstärken oder Versteifen von Bauteilen, insbesondere hohlen Bauteilen.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen KatalysatorZusammensetzungen bezieht sich diese Angabe nicht auf die absolute Menge an Molekülen sondern auf die Art des Bestandteils. "Mindestens ein organisches Carbonat" bedeutet daher beispielsweise ein oder mehrere organische Carbonate, d.h. eine oder mehrere verschiedene Arten von organischen Carbonaten. Zusammen mit Mengenangaben beziehen sich die Mengenangaben auf die Gesamtmenge der entsprechend bezeichneten Art von Bestandteil, wie bereits oben definiert.

"Ganze Zahl", wie hierin verwendet, ist 0 und alle natürliche Zahlen. "Natürliche Zahl", wie hierin verwendet, bezieht sich auf die allgemeingültige Bedeutung des Begriffs und ist 1, 2, 3, 4, 5, 6, 7, 8, 9, 10 und mehr.

Als einen wesentlichen Bestandteil enthalten die Zusammensetzungen mindestens eine organische Verbindung umfassend mindestens zwei cyclische Carbonatgruppen als chemisches Treibmittel, welche den Vorteil aufweisen, dass sie weder gesundheitsschädlich noch explosiv sind und bei der Expansion sehr geringere bis keine Mengen an flüchtigen organischen Verbindungen (VOC) entstehen. Die Zersetzungsprodukte sind im wesentlichen CO₂ und das organische "Rest-Molekül", an welches die cyclischen Carbonatgruppen gebunden waren. Das organische "Rest-Molekül" kann dann in das Bindemittelsystem eingebunden werden, so dass keine flüchtigen organischen Verbindungen freigesetzt werden. Ferner weisen die damit hergestellten Produkte eine gleichmäßige Schaumstruktur über den gesamten Prozesstemperaturbereich auf, der für die Härtung genutzt wird.

Unter einem chemischen Treibmittel werden erfindungsgemäß Verbindungen verstanden, die sich bei Einwirkung von Wärme zersetzen und dabei Gase freisetzen. Die mindestens eine organische Verbindung umfassend mindestens zwei cyclische Carbonatgruppen wird erfindungsgemäß als chemisches Treibmittel eingesetzt. Dabei weist diese Verbindung mindestens zwei cyclische Carbonatgruppen auf, die an die organische Verbindung gebunden sind. Die cyclischen Carbonatgruppen sind zwingend an eine organische Verbindung gebunden. Eine Verbindung, die lediglich aus einer cyclischen Carbonatgruppe besteht, wie Ethylencarbonat, stellt keine erfindungsgemäße Verbindung dar. Rein cyclische Carbonate als Treibmittel, wie Ethylencarbonat, hinterlassen bei Zersetzten flüchtige organische Verbindungen, die nicht oder nur schlecht in der geschäumten Zusammensetzung eingebunden werden könnten.

Grundsätzlich weist die als Treibmittel eingesetzte organische Verbindung mindestens zwei cyclische Carbonatgruppen, vorzugsweise zwei bis vier cyclische Carbonatgruppen auf. Bevorzugt ist die als Treibmittel eingesetzte organische Verbindung ein Polyether und/oder Polyester, insbesondere Polyether, an welchen mindestens zwei cyclische Carbonatgruppen gebunden sind.

In einer weiteren bevorzugten Ausführungsform ist die als Treibmittel eingesetzte organische Verbindung umfassend mindestens eine cyclische Carbonatgruppe eine Verbindung der Formel (I) 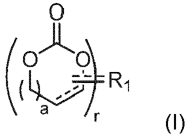 Hierbei ist ------ eine Einfach- oder Doppelbindung, vorzugsweise eine Einfachbindung. Es ist selbstverständlich, dass wenn der Ring eine Doppelbindung enthält, R₁ nicht über eine exo-Doppelbindung sondern über eine Einfachbindung gebunden ist und umgekehrt. R₁ ist lineares oder verzweigtes, substituiertes oder unsubstituiertes Alkyl, lineares oder verzweigtes, substituiertes oder unsubstituiertes Heteroalkyl, lineares oder verzweigtes, substituiertes oder unsubstituiertes Alkenyl, lineares oder verzweigtes, substituiertes oder unsubstituiertes Alkinyl, substituiertes oder unsubstituiertes Cycloalkyl, substituiertes oder unsubstituiertes Aryl, oder -C(O)-R^{a}, wobei R^{a} lineares oder verzweigtes, substituiertes oder unsubstituiertes Alkyl, lineares oder verzweigtes, substituiertes oder unsubstituiertes Heteroalkyl, lineares oder verzweigtes, substituiertes oder unsubstituiertes Alkenyl, lineares oder verzweigtes, substituiertes oder unsubstituiertes Alkinyl, substituiertes oder unsubstituiertes Cycloalkyl, substituiertes oder unsubstituiertes Aryl ist, vorzugsweise ein lineares oder verzweigtes, substituiertes oder unsubstituiertes Heteroalkyl, wobei R₂ vorzugsweise mindestens 2, vorzugsweise mindestens 4 Kohlenstoffatome umfasst. In der Formel (II) ist a eine ganze Zahl von 0 bis 5, vorzugsweise 0 oder 1 und besonders bevorzugt 0. Ferner ist r eine natürliche Zahl von 2 bis 10, vorzugsweise von 2 bis 4.

"Substituiert", wie im Zusammenhang mit den Alkyl- oder Heteroalkylresten hierin verwendet, bedeutet, dass die entsprechende Gruppe mit einem oder mehreren Substituenten ausgewählt aus der Gruppe bestehend aus -OR', -COOR', -NR'R", -C(=X)NR'R", -NR"C(=X)NR'R", Halogen, unsubstituiertem C₆₋₁₄ Aryl, unsubstituiertem C₂₋₁₄ Heteroaryl enthaltend 1 bis 5 Heteroatome ausgewählt aus O, N und S, unsubstituiertem C₃₋₁₀ Cycloalkyl und unsubstituiertem C₂₋₁₀ Heteroalicyclyl enthaltend 1 bis 5 Heteroatome ausgewählt aus O, N und S substituiert ist.

"Substituiert", wie im Zusammenhang mit den Aryl- und Cycloalkylresten hierin verwendet, bedeutet, dass die entsprechende Gruppe mit einem oder mehreren Substituenten ausgewählt aus der Gruppe bestehend aus -OR', -COOR', -NR'R", -C(=X)NR'R", -NR"C(=X)NR'R", Halogen, unsubstituiertem C₁₋₁₀ Alkyl und -CH₂-Aryl substituiert sein kann, wobei die Arylgruppe in der -CH₂-Aryl-Gruppe wiederum mit-OR', -COOR', -NR'R", -C(=X)NR'R", -NR"C(=X)NR'R", Halogen und unsubstituiertem C₁₋₁₀ Alkyl substituiert sein kann.

R' und R" sind dabei unabhängig voneinander ausgewählt aus H, unsubstituiertem C₁₋₁₀ Alkyl, unsubstituiertem C₆₋₁₄ Aryl, unsubstituiertem C₂₋₁₄ Heteroaryl, unsubstituiertem C₃₋₁₀ Cycloalkyl, unsubstituiertem C₂₋₁₀ Heteroalicyclyl, Alkylaryl, Arylalkyl, Heteroarylalkyl und Alkylheteroaryl.

"Alkyl", wie hierin verwendet, bezieht sich auf lineare oder verzweigte Alkylgruppen vorzugsweise mit 1 bis 30 Kohlenstoffatomen, wie beispielsweise Methyl, Ethyl, n-Propyl, iso-Propyl, n-Butyl, n-Pentyl, n-Hexyl, n-Heptyl, n-Octyl, n-Nonyl, n-Decyl, n-Undecyl und n-Dodecyl sowie die linearen C₁₄, C₁₆ und C₁₈ Alkylreste. In verschiedenen Ausführungsformen sind die Alkylreste kurzkettige C₁₋₄ Alkylreste, insbesondere unsubstituierte, lineare C₁₋₄ Alkylreste. Die Alkylreste können substituiert oder unsubstituiert sein, sind aber vorzugsweise unsubstituiert. Wenn sie substituiert sind, werden die Substituenten insbesondere ausgewählt aus der oben beschriebenen Gruppe von Substituenten.

"Heteroalkyl", wie hierin verwendet, bezieht sich auf Alkylreste wie oben definiert, in denen mindestens ein Kohlenstoffatom durch ein Heteroatom ersetzt ist, insbesondere N oder O, besonders bevorzugt O.

"Aryl", wie hierin verwendet, bezieht sich auf aromatische Gruppen mit 5 bis 30 Kohlenstoffatomen, die mindestens einen aromatischen Ring, aber auch mehrere kondensierte Ringe aufweisen können, wie beispielsweise Phenyl, Naphthyl, Anthracenyl und dergleichen. Die Arylreste können substituiert oder unsubstituiert sein. Wenn sie substituiert sind, werden die Substituenten ausgewählt aus der oben beschriebenen Gruppe.

"Heteroaryl", wie hierin verwendet, bezieht sich auf Arylreste wie oben definiert, in denen mindestens ein Kohlenstoffatom durch ein Heteroatom ersetzt ist, insbesondere N, S oder O, besonders bevorzugt O.

"Halogen", wie hierin verwendet, bezieht sich auf F, Cl, Br und I.

"Cycloalkyl", wie hierin verwendet, bezieht sich auf nicht-aromatische, cyclische Kohlenwasserstoffe, insbesondere cyclische Alkyl- oder Alkenylreste wie oben definiert, z.B. Cyclopentyl-, Cyclohexyl- und Cyclohexenyl-Reste. Wenn sie substituiert sind, werden die Substituenten ausgewählt aus der oben beschriebenen Gruppe.

"Heteroalicyclyl", wie hierin verwendet, bezieht sich auf Cycloalkylreste wie oben definiert, in denen mindestens ein Kohlenstoffatom durch ein Heteroatom ersetzt ist, insbesondere N, S oder O, besonders bevorzugt O.

In einer anderen bevorzugten Ausführungsform ist die als Treibmittel eingesetzte organische Verbindung umfassend mindestens eine cyclische Carbonatgruppe eine Verbindung der Formel (II) 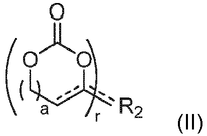 In der Formel (II) sind ------, a und r wie oben definiert. Ferner ist R₂ wie R₁ definiert. Auch hier ist es selbstverständlich, dass wenn der Ring eine Doppelbindung enthält, R₂ nicht über eine exo-Doppelbindung sondern über eine Einfachbindung gebunden ist und umgekehrt. R₂ ist ferner wie R₁ definiert und vorzugsweise ein lineares oder verzweigtes, substituiertes oder unsubstituiertes Heteroalkyl.

Besonders bevorzugt sind solche Verbindungen, in denen R₁ bzw. R₂ eine zwei- oder mehrwertige Heteroalkylgruppe, wie beispielsweise ein Pentaerithrytolrest, sind, an welchen dann 2 oder mehr der cyclischen Carbonatgruppen gebunden sind. Insbesondere stehen R₁ bzw. R₂ für Polyester und Polyether, bevorzugt Polyether, an welche dann 2 oder mehr der cyclischen Carbonatgruppen gebunden sind.

Zur Herstellung von Alkenyletherpolyolen werden häufig cyclische Carbonate eingesetzt, die Derivaten der Carbonate der Formeln (I) und (II) entsprechen. Beispielhafte Derivate davon schließen solche ein, die an den Ring-Methylengruppen, insbesondere denen die nicht den R₃ bzw. R₄ Rest tragen, substituiert sind, beispielsweise mit organischen Resten, insbesondere linearen oder verzweigten, substituierten oder unsubstituierten Alkyl- oder Alkenylresten mit bis zu 20 Kohlenstoffatomen, insbesondere =CH₂ und -CH=CH₂, oder linearen oder verzweigten, substituierten oder unsubstituierten Heteroalkyl- oder Heteroalkenylresten mit bis zu 20 Kohlenstoffatomen und mindestens einem Sauerstoff- oder Stickstoffatom, oder funktionellen Gruppen, wie beispielsweise -OH oder -COOH. Beispiele für solche Derivate schließen beispielsweise di-(Trimethylolpropan)dicarbonat ein, wobei der R₁ bzw. R₂ Rest in der 5-Position ein Methylen-Trimethylolmonocarbonatrest ist.

In verschiedenen Ausführungsformen in denen der R₁ bzw. R₂ Rest über eine Einfachbindung gebunden ist, kann das Ring-Kohlenstoffatom, dass den R₁ bzw. R₂ Rest trägt mit einem weiteren Substituenten, der wie die oben genannten Substituenten für die anderen Ring-Methylengruppe definiert ist, substituiert sein.

Weitere Derivate sind solche in denen eines oder beide der Ring-Sauerstoffatome durch Schwefelatome ersetzt sind sowie solche in denen alternativ oder zusätzlich das Carbonyl-Sauerstoffatom durch ein Schwefelatom ersetzt ist.

Bevorzugt werden die als Treibmittel eingesetzten organischen Verbindungen umfassend mindestens zwei cyclische Carbonatgruppen hergestellt durch Umsetzung eine Epoxides oder Oxetans mit Kohlendioxid, insbesondere die Verbindungen der Formel (II) werden so hergestellt. Bei der Umsetzung eines Epoxides wird eine Verbindung mit einem fünfgliedrigen cyclischen Carbonat erhalten, während bei der Umsetzung eines Oxetans eine Verbindung mit einem sechsgliedrigen cyclischen Carbonat erhalten wird. Besonders bevorzugt werden die als Treibmittel eingesetzten organischen Verbindungen umfassend mindestens zwei cyclische Carbonatgruppen hergestellt durch Umsetzung eines Polyepoxides mit Kohlendioxid. Besonders bevorzugt sind Epoxide basierend auf einem mehrwertigen aliphatischen Polyether, wie Ether des Pentaerithrytols, oder aromatische Epoxide, insbesondere Epoxide basieren auf Bisphenol-Derivaten. Bei der Umsetzung eines Polyepoxides (Verbindung mit mindestens zwei, insbesondere genau zwei Epoxidgruppen pro Molekül) mit Kohlendioxids muss die Umsetzung nicht zwangsläufig vollständig erfolgen, vorzugsweise erfolgt eine Umsetzung von 70 bis 100% der Epoxidgruppen. Allerdings ist eine vollständige Umsetzung bevorzugt.

In einer noch weiteren bevorzugten Ausführungsform der vorliegenden Erfindung ist die als Treibmittel eingesetzte organische Verbindung umfassend mindestens zwei cyclische Carbonatgruppen eine Verbindung der Formel (III) oder (IV).

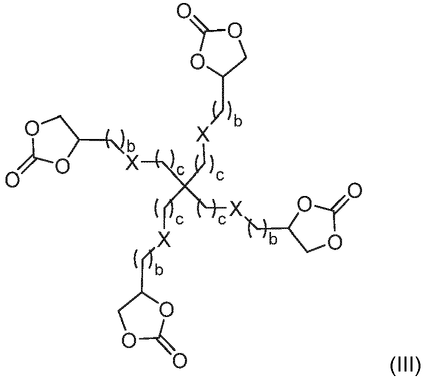

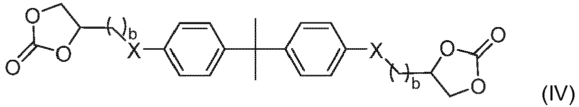

Hierbei ist jedes b und jedes c jeweils unabhängig voneinander eine natürliche Zahl von 1 bis 5 vorzugsweise 1 oder 2 und besonders bevorzugt 1. Jedes b kann genauso wie jedes c verschieden oder gleich sein. Vorzugsweise ist jedes b und jedes c gleich. Ferner ist jedes X unabhängig ausgewählt aus der Gruppe bestehend aus O und S. Vorzugsweise ist jedes X O.

In einer noch weiteren bevorzugten Ausführungsform ist die als Treibmittel eingesetzte organische Verbindung umfassend mindestens zwei cyclische Carbonatgruppen eine Verbindung der Formel (V) oder (VI)

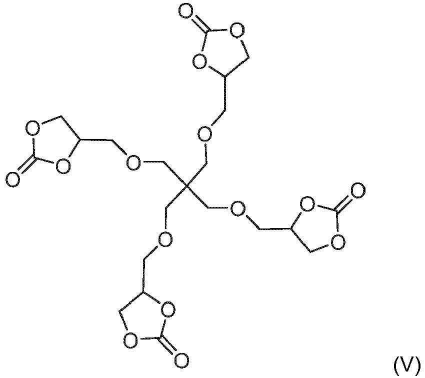

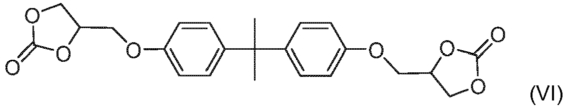

Die erfindungsgemäßen organischen Carbonate sind synthetisch über ein entsprechendes Epoxid und CO₂ als Ausgangsstoffe in Anwesenheit eines Katalysators unter milden Bedingungen zugänglich.

Die thermisch expandierbaren Zusammensetzungen enthalten die als Treibmittel eingesetzten organischen Verbindungen umfassend mindestens zwei cyclische Carbonatgruppen in einer Menge von 0,1 bis 40 Gew.-%, vorzugsweise 1 bis 35 Gew.-%, besonders bevorzugt 5 bis 35 Gew.-%, noch weiter bevorzugt 10 bis 30 Gew.-% und am bevorzugtesten 15 bis 25 Gew.-%. Dabei beziehen sich die Gew.-%, soweit nicht anders beschrieben, auf das Gesamtgewicht der Gesamtzusammensetzung vor der Expansion.

In einer anderen bevorzugten Ausführungsform enthalten die thermisch expandierbaren Zusammensetzungen die als Treibmittel eingesetzten organischen Verbindungen umfassend mindestens zwei cyclische Carbonatgruppen in einer Menge von 0,1 bis 40 Gew.-%, vorzugsweise 1 bis 35 Gew.-%, besonders bevorzugt 5 bis 35 Gew.-%, noch weiter bevorzugt 10 bis 30 Gew.-% und am bevorzugtesten 15 bis 25 Gew.-%, jeweils bezogen auf das Bindemittelsystem (Gesamtgewicht der Gesamtzusammensetzung vor der Expansion ohne Füllstoffe).

Optional können der erfindungsgemäßen Zusammensetzung weitere chemische und/oder physikalische Treibmittel zugesetzt werden.

In einer besonders bevorzugten Ausführungsform wird das Treibmittel als "Masterbatch" in die thermisch expandierbare Zusammensetzung eingebracht. Unter dem Masterbatch versteht man eine Vormischung des zu verwendenden Treibmittels z.B. mit einem Polymer, vorzugsweise dem mindestens einem Polymer. Neben den prozessualen Vorteilen hat diese Vorgehensweise den Vorteil, dass das Treibmittel besonders homogen und schonend verteilt werden kann und dabei weniger Hitze durch das Kneten/Mischen entsteht. Das Treibmittel kann so vor einer ungewollten Zersetzung geschützt werden.

Bevorzugt sind die expandierbaren Zusammensetzungen frei von ADCA (Azodicarbonamid) und OBSH (4,4'-Oxybis(benzolsulfonylhydrazid), insbesondere frei von ADCA (Azodicarbonamid), OBSH (4,4'-Oxybis(benzolsulfonylhydrazid)), DNPT (Dinitrosopentamethylentetramin), PTSS (p-Toluolsemicarbazid), BSH (Benzol-4-sulfonohydrazid), TSH (Toluol-4-sulfonohydrazid) und 5-PT (5-Phenyltetrazol), besonders bevorzugt frei von anderen exothermen Treibmitteln, insbesondere frei von anderen Treibmitteln. Bevorzugt sind die expandierbaren Zusammensetzungen frei von anorganischen Carbonaten. "Frei von", wie in diesem Zusammenhang verwendet, bedeutet, dass die Menge des entsprechenden Stoffs in dem Reaktionsgemisch weniger als 0,05 Gew.-%, vorzugsweise weniger als 0,01 Gew.-%, noch bevorzugter weniger als 0,001 Gew.-%, bezogen auf das Gesamtgewicht des Reaktionsgemischs beträgt, insbesondere gänzlich frei.

Allgemein enthalten die hierin beschriebenen thermisch expandierbaren Zusammensetzungen zusätzlich zu den oben beschriebenen Treibmitteln mindestens ein reaktives Bindemittel und mindestens einen Härter und/oder Beschleuniger.

Vorzugsweise liegt der Härter und/oder Beschleuniger allgemein in einer Menge von insgesamt mindestens 0,25 Gew.-% und insbesondere von mindestens 1,5 Gew.-% bezogen auf die Gesamtzusammensetzung vor. Mehr als insgesamt 5 Gew.-% bezogen auf die Gesamtmasse der Zusammensetzung sind jedoch in der Regel nicht erforderlich. Allerdings kann der Anteil des Härter und/oder Beschleuniger stark variieren in Abhängigkeit vom verwendeten System.

Der Anteil des reaktiven Bindemittels an der Gesamtzusammensetzung kann allgemein im Bereich von 2 bis 65 Gew.-% liegen. Allerdings kann der Anteil des Bindemittels stark variieren in Abhängigkeit vom verwendeten System. Bevorzugte reaktive Bindemittel der thermisch expandierbaren Zusammensetzungen sind ausgewählt aus der Gruppe von Epoxiden, Kautschuken und peroxidisch vernetzbaren Polymeren.

In einer bevorzugten Ausführungsform, wie für Niedertemperatur-expandierende Formulierungen, weisen die reaktiven Bindemittel einen Schmelzpunkt (bestimmbar mittels DSC nach ASTM D3417) unterhalb der Zersetzungstemperatur des Treibmittels auf. In einer vorteilhaften Ausführungsform, z.B. für Niedertemperatur-expandierende Formulierungen, weisen die Treibmittel eine Zersetzungstemperatur unterhalb von 175 °C, bevorzugt zwischen 175 und 120 °C auf und das mindestens eine reaktive Bindemittel hat einen Schmelzpunkt unterhalb von 100 °C, bevorzugt zwischen 75 und 55 °C und/oder einen Schmelzflußindex MFI von größer 6 g/10 min, vorzugsweise zwischen 10 und 6 g/10min. In einer anderen vorteilhaften Ausführungsform, z.B. für Hochtemperatur-expandierende Formulierungen, weisen die Treibmittel eine Zersetzungstemperatur oberhalb von 175 °C, bevorzugt zwischen 175 und 240 °C auf und das mindestens eine reaktive Bindemittel hat einen Schmelzpunkt unterhalb von 125 °C, bevorzugt zwischen 100 und 80 °C und/oder einen Schmelzflußindex MFI von kleiner 6 g/10 min, vorzugsweise zwischen 1,5 und 6 g/10min. In den beiden Ausführungsformen ist es jeweils bevorzugt, dass das reaktive Bindemittel sowohl die genannte Schmelztemperatur als auch den genannten MFI aufweist.

Ein bevorzugter Gegenstand enthält als reaktives Bindemittel Epoxide. Als Epoxidharze eignen sich eine Vielzahl von Polyepoxiden, die mindestens 2 1,2- Epoxygruppen pro Molekül haben. Das Epoxid-Äquivalent dieser Polyepoxide kann zwischen 150 und 50000, vorzugsweise zwischen 170 und 5000, variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schliessen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere geeignete Polyphenole als Basis für die Polyglycidylether sind die bekannten Kondensationsprodukte aus Phenol und Formaldehyd oder Acetaldehyd vom Typ der Novolakharze.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Je nach Anwendungszweck kann es bevorzugt sein, dass die Zusammensetzung zusätzlich ein flexibilisierend wirkendes Harz enthält. Hierbei kann es sich ebenfalls um ein Epoxidharz handeln. Als flexibilisierend wirkende Epoxyharze können die an sich bekannten Addukte aus Carboxylterminierten Butadienacrylnitrilcopolymeren (CTBN) und flüssigen Epoxidharzen auf der Basis des Diglycidylethers vom Bisphenol A eingesetzt werden. Konkrete Beispiele sind die Umsetzungsprodukte Hycar CTBN 1300 X8, 1300 X13 oder 1300 X15 der Firma B. F. Goodrich mit flüssigen Epoxidharzen. Weiterhin lassen sich auch die Umsetzungsprodukte von aminoterminierten Polyalkylenglykolen (Jeffamine) mit einem Überschuss an flüssigen Polyepoxiden einsetzen. Grundsätzlich können auch Umsetzungsprodukte von Mercapto-funktionellen Prepolymeren oder flüssige Thiol-Polymere mit einem Überschuss an Polyepoxiden als flexibilisierende Epoxidharze erfindungsgemäß eingesetzt werden. Ganz besonders bevorzugt sind jedoch die Umsetzungsprodukte von polymeren Fettsäuren, insbesondere der Dimerfettsäure mit Epichlorhydrin, Glycidol oder insbesondere Diglycidylether des Bisphenols A (DGBA).

Die thermisch expandierbaren Zubereitungen enthalten vorzugsweise mindestens 5 Gew.-% mindestens eines Epoxides. Thermisch expandierbare Zubereitungen, die 5 bis 70 Gew.-%, insbesondere 20 bis 50 Gew.-%, mindestens eines Epoxides jeweils bezogen auf die Gesamtmasse der thermisch expandierbaren Zubereitung enthalten, sind besonders bevorzugt.

Als thermisch aktivierbare oder latente Härter für das Epoxidharz-Bindemittelsystem aus den genannten Komponenten können Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter stöchiometrisch mit in die Härtungsreaktion einbezogen sein. Sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Für einkomponentige, hitzehärtende Formkörper ist das Auswahlkriterium die niedrige Löslichkeit dieser Stoffe bei Raumtemperatur in dem Harzsystem, so dass hier feste, feinvermahlene Härter den Vorzug haben. Insbesondere ist Dicyandiamid geeignet. Damit ist eine gute Lagerstabilität der hitzehärtbaren Formkörper gewährleistet.

Zusätzlich zu oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Diese haben jedoch vielfach eine zu hohe Löslichkeit in dem Klebstoffsystem, so dass hier keine brauchbare Lagerstabilität des einkomponentigen Systems erreicht wird. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁₋₁₂-Alkylimidazole oder N-Arylimidazole. Besonders bevorzugt ist der Einsatz einer Kombination aus Härter und Beschleuniger in Form von sog. beschleunigten Dicyandiamiden in feinvermahlener Form. Dadurch erübrigt sich der separate Zusatz von katalytisch wirksamen Beschleunigern zu dem Epoxid-Härtungssystem.

Zur Verbesserung der Stoßfestigkeit können ferner ein oder mehrere so genannte "impact modifier" anwesend sein, wie sie im Stand der Technik für diesen Zweck bekannt sind. Beispiele sind thermoplastische Harze, die vorzugsweise gegenüber Epoxigruppen reaktive Gruppen tragen. Weiterhin sind natürliche oder synthetische Kautschuke für diesen Zweck geeignet. Konkrete Beispiele hierfür können dem Dokument WO 2007/004184 in den Abschnitten [27] und [28] (Seiten 6 und 7) entnommen werden.

Ein weiterer bevorzugter Gegenstand enthält mindestens ein reaktives Bindemittel auf der Basis von natürlichen und / oder synthetischen Kautschuken. Neben den reaktiven Bindemitteln auf Basis von natürlichen und/oder synthetischen Kautschuken (d.h. olefinische Doppelbindung enthaltenden Elastomeren) enthält die Zusammensetzung vorzugsweise mindestens ein Vulkanisationsmittel. In einer bevorzugten Ausführungsform von thermisch expandierbaren Zusammensetzungen auf Basis von natürlichen und/oder synthetischen Kautschuken enthält die Zusammensetzung:
- 0-10 Gew.-%, vorzugsweise 1-10 Gew.-% Festkautschuk(e) mit einem Molekulargewicht von 100000 oder höher
- 5-50 Gew.-% flüssige(s) Polyen(e) mit einem Molekulargewicht unter 20000 und
- ein Vulkanisationssystem bestehend aus Schwefel und einem oder mehreren organischen Beschleuniger(n) und /oder Metalloxid(en).

Flüssigkautschuke oder Elastomere können dabei aus der folgenden Gruppe der Homo- und/oder Copolymeren ausgewählt werden:
Polybutadiene, insbesondere die 1,4- und 1,2-Polybutadiene, Polybutene, Polyisobutylene, 1,4- und 3,4-Polyisoprene, Styrol-Butadien-Copolymere, Butadien-Acrylnitril-Copolymere, wobei diese Polymere endständige und/oder (statistisch verteilte) seitenständige funktionelle Gruppen haben können. Beispiele für derartige funktionelle Gruppen sind Hydroxy-, Amino-, Carboxyl-, Carbonsäureanhydrid- oder Epoxygruppen. Das gewichtsmittlere Molekulargewicht Mw dieser Flüssigkautschuke ist typischerweise unterhalb von 20000 g/mol, vorzugsweise zwischen 900 und 10000 (gemessen mittels GPC gegen einen Polystyrol-Standard).

Der Anteil an Flüssigkautschuk an der Gesamtzusammensetzung hängt dabei von der erwünschten Rheologie der ungehärteten Zusammensetzung und den erwünschten mechanischen Eigenschaften der ausgehärteten Zusammensetzung ab. Der Anteil an flüssigem Kautschuk oder Elastomer variiert normalerweise zwischen 5 und 50 Gew.-% der Gesamtformulierung. Dabei hat es sich als zweckmäßig erwiesen, vorzugsweise Mischungen von Flüssigkautschuken unterschiedlicher Molekulargewichte und unterschiedlicher Konfiguration in Bezug auf die restlichen Doppelbindungen einzusetzen. Zur Erzielung optimaler Haftung auf den diversen Substraten wird in den besonders bevorzugten Formulierungen anteilig eine Flüssigkautschukkomponente mit Hydroxylgruppen bzw. Säureanhydridgruppen eingesetzt. Mindestens einer der Flüssigkautschuke sollte einen hohen Anteil an cis-1,4-Doppelbindungen, ein weiterer einen hohen Anteil an Vinyldoppelbindungen enthalten.

Geeignete Festkautschuke haben im Vergleich zu den Flüssigkautschuken ein signifikant höheres Molekulargewicht (Mw=100000 oder höher), Beispiele für geeignete Kautschuke sind Polybutadien, vorzugsweise mit einem sehr hohen Anteil an cis-1,4-Doppelbindungen (typischerweise über 95%), Styrolbutadienkautschuk, Butadienacrylnitril-kautschuk, synthetischer oder natürlicher Isoprenkautschuk, Butylkautschuk oder Polyurethankautschuk.

Für die Zusammensetzungen auf Basis von natürlichen und/oder synthetischen Kautschuken eignen sich eine Vielzahl von Vulkanisationssystemen sowohl auf der Basis von elementarem Schwefel als auch Vulkanisationssysteme ohne elementarem Schwefel, zu letzterem zählen die Vulkanisationssysteme auf der Basis von Thiuramdisulfiden und Peroxiden. Besonders bevorzugt sind Vulkanisationssysteme auf der Basis von elementarem Schwefel und organischen Vulkanisationsbeschleunigern sowie Zinkverbindungen. Der pulverförmige Schwefel wird dabei in Mengen von 0,1 bis 15 Gew.%, bezogen auf die Gesamt-zusammensetzung eingesetzt, besonders bevorzugt werden Mengen zwischen 0,2 und 8 Gew.-%%, ganz besonders bevorzugt zwischen 1 und 4 Gew.-% eingesetzt. Als organische Beschleuniger eignen sich die Dithiocarbamate (in Form ihrer Ammonium- bzw. Metallsalze), Xanthogenate, Thiuram-Verbindungen (Monosulfide und Disulfide), Thiazol-Verbindungen, Aldehyd/Aminbeschleuniger (z.B. Hexamethylentetramin) sowie Guanidinbeschleuniger, wobei ganz besonders bevorzugt Dibenzothiazyldisulfid (MBTS) verwendet wird. Bevorzugt wird auch ein kombiniertes Vulkanisationssystem aus elementarem Schwefel, den oben genannten Beschleunigern und einem Chinonoxim, wie p-Benzochinondioxim, oder einer Nitrosobenzol-Verbindung, wie p-Dinitrosobenzol, verwendet. Die organischen Beschleuniger werden in Mengen zwischen 0,5 und 8 Gew.-% bezogen auf die Gesamtformulierung, bevorzugt zwischen 1 und 3 Gew.-% eingesetzt. Bei den als Beschleuniger wirkenden Zinkverbindungen kann zwischen den Zinksalzen von Fettsäuren, Zinkdithiocarbamaten, basischen Zinkcarbonaten sowie insbesondere feinteiligem Zinkoxid gewählt werden. Der Gehalt an Zinkverbindungen liegt im Bereich zwischen 0,5 und 10 Gew.-%, vorzugsweise zwischen 1 und 5 Gew.-%. Zusätzlich können weitere typische Kautschukvulkanisationshilfsmittel wie z.B. Fettsäuren (z.B. Stearinsäure) in der Formulierung vorhanden sein.

Das Vulkanisationssystem kann aber auch frei von elementarem Schwefel sein. Beispielsweise können als Vulkanisationssystem Peroxide, vorzugsweise organische Peroxide eingesetzt werden. Beispiele sind: Beispiele und bevorzugte Peroxide stellen die unten genannten dar. Die Einsatzmengen der Peroxide betragen vorzugsweise: 0,3 - 4,5 Gew.-% bezogen auf die Gesamtzusammensetzung.

Obwohl diese Zusammensetzungen aufgrund des Gehaltes an Flüssigkautschuk mit funktionellen Gruppen in aller Regel bereits eine sehr gute Haftung auf Substraten haben, können, falls erforderlich, Klebrigmacher und/oder Haftvermittler zugesetzt werden. Hierzu eignen sich beispielsweise Kohlenwasserstoffharze, Phenol-harze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid-enthaltende Copolymere. Auch der Zusatz von Polyepoxidharzen in geringen Mengen (<1 Gew.%) kann bei manchen Substraten die Haftung verbessern. Hierfür werden dann jedoch vorzugsweise die festen Epoxid-harze mit einem Molekulargewicht deutlich über 700 in fein-gemahlener Form eingesetzt, so dass die Formulierungen trotzdem im Wesentlichen frei von Epoxyharzen sind, insbesondere solchen mit einem Molekulargewicht unter 700. Falls Klebrigmacher bzw. Haftvermittler eingesetzt werden, hängt deren Art und Menge von der Polymerzusammensetzung des Kleb-/ Dichtstoffes, von der gewünschten Festigkeit der gehärteten Zusammensetzung und von dem Substrat, auf welches die Zusammensetzung appliziert wird, ab. Typische klebrig-machende Harze (Tackifier) wie z.B. die Terpenphenolharze oder Harzsäurederivate, werden normalerweise in Konzentrationen zwischen 5 und 20 Gew.-% verwendet, typische Haftvermittler wie Polyamine, Polyaminoamide oder Resorcinderivate werden im Bereich zwischen 0,1 und 10 Gew.-% verwendet.

In einer weiteren bevorzugten Ausführungsform von thermisch expandierbaren Zusammensetzungen auf Basis von natürlichen und / oder synthetischen Kautschuken enthält die Zusammensetzungen
- 15 bis 70 Gew.-%, vorzugsweise 20 bis 40 Gew.-%, von mindestens einem thermoplastischen Elastomer, vorzugsweise ein Styrol / Butadien oder Styrol / Isopren-Blockcopolymer;
- 5 bis 40 Gew.-%, vorzugsweise 10 bis 20 Gew.-%, mindestens eines nicht-elastomeren Thermoplasten (vorzugsweise ein Ethylen / Vinylacetat oder Ethylen / Methylacrylat-Copolymer) und
- 0,1 bis 4 Gew.-% eines oder mehrerer Vulkanisationsmittel, wobei die obengenannten bevorzugt sind, insbesondere Schwefel.

Des Weiteren können die Zusammensetzungen bevorzugt folgende Komponenten einzeln oder in Kombination enthalten:
- 0,01 bis 2 Gew.-%, vorzugsweise von 0,05 bis 1 Gew.% von mindestens einem Stabilisator oder Antioxidans;
- 0,1 bis 15 Gew.-%, vorzugsweise 2 bis 10 Gew.%, von mindestens einem klebrigmachenden Harz;
- 0,1 bis 15 Gew-%, vorzugsweise 2 bis 10 Gew.%, mindestens eines Weichmachers;
- 0,5 und 8 Gew.-%, bevorzugt zwischen 1 und 3 Gew.-% von mindestens einem organischen Beschleuniger, insbesondere die oben genannten;
- 0,5 und 10 Gew.%, vorzugsweise zwischen 1 und 5 Gew.-% mindestens einer als Beschleuniger wirkenden Zinkverbindung, insbesondere feinteiliges Zinkoxid.

Hierbei sind die Prozentsätze als Gewichtsprozentsätze auf das Gesamtgewicht des thermisch expandierbaren Materials ausgedrückt.

Bevorzugt wird ein thermoplastisches Elastomer eingesetzt, dessen Erweichungspunkt nicht höher als die Temperatur liegt, bei der das Treibmittel beginnt, aktiviert zu werden, vorzugsweise liegt der Erweichungspunkt mindestens etwa 30 °C niedriger als die Aktivierungstemperatur des Treibmittels. Der Erweichungspunkt wird mittels DSC bestimmt.

Das thermoplastische Elastomer wird vorzugsweise ausgewählt aus der Gruppe bestehend aus thermoplastischen Polyurethanen (TPU) und Block-Copolymere (einschließlich linearer als auch radialer Blockcopolymere) der A-B-, A-B-A-, A-(B-A)n-B- und (A-B)n-Y-Typen, wobei A ein aromatischer Polyvinyl-("hard")-Block ist und der B-Block einen gummiartigen ("soft")-Block aus Polybutadien, Polyisopren oder dergleichen ist, der teilweise hydrogeniert sein kann oder vollständig hydriert ist, Y eine polyfunktionelle Verbindung ist und n eine ganze Zahl von mindestens 3 ist.Die Hydrierung des B-Blocks entfernt ursprünglich vorhandenen Doppelbindungen und erhöht die thermische Stabilität des Blockcopolymers. Vorzugsweise liegt jedoch keine Hydrierung vor.

Geeignete Block-Copolymere umfassen, sind aber nicht beschränkt auf, SBS (Styrol / Butadien / Styrol)-Copolymere, SIS (Styrol / Isopren / Styrol)-Copolymere, SEPS (Styrol / Ethylen / Propylen / Styrol)-Copolymere, SEEPS (Styrol / Ethylen / Ethylen / Propylen / Styrol) oder SEBS (Styrol / Ethylen / Butadien / Styrol)-Copolymere. Besonders geeignete Blockcopolymere sind Styrol / Isopren / Styrol-Triblock-Polymere, als auch ganz oder teilweise hydrierten Derivaten davon, wobei der Polyisopren-Block vorzugsweise einen relativ hohen Anteil von Monomereinheiten, abgeleitet von Isopren mit einer 1,2 und / oder 3,4 Konfiguration enthält.

Vorzugsweise sind mindestens etwa 50% der polymerisierten Isopren-Monomer-Einheiten in einer 1,2 und / oder 3,4-Konfiguration einpolymerisiert, wobei der Rest der Isopren-Einheiten eine 1,4-Konfiguration aufweisen. Solche Block-Copolymere sind zum Beispiel erhältlich von Kuraray Co., Ltd unter dem Handelsnamen HYBRAR.

In bestimmten bevorzugten Ausführungsformen der Erfindung haben die "harten" Blöcke einen Gewichtsanteil von etwa 15 bis etwa 30 Gew.-% des Blockcopolymers und die "weichen" Blöcke einen von etwa 70 bis etwa 85 Gew.-% des Blockcopolymers.

Die Glasübergangstemperatur der "weichen" Blöcke liegt vorzugsweise bei etwa -80 ° C bis etwa 10 ° C, während die Glasübergangstemperatur von den "harten" Blöcken vorzugsweise bei etwa 90 °C bis etwa 110 ° C liegt. Der Schmelzflußindex des Blockcopolymers beträgt vorzugsweise etwa 0,5 bis etwa 6 g/10 min (gemessen nach ASTM D1238, 190 ° C, 2,16 kg). Bevorzugt weist das BlockCopolymer ein zahlenmittleres Molekulargewicht von etwa 30.000 bis etwa 300.000, gemessen mittels GPC gegen einen Polystyrol-Standard.

Als thermoplastische Elastomere können auch thermoplatische Polyurethane (TPU) eingesetzt werden, als auch andere Blockcopolymere, die harte und weiche Segmente enthalten, wie beispielsweise Polystyrol/Polydimethylsiloxan-Blockcopolymere, Polysulfon/Polydimethylsiloxan-Blockcopolymere, Polyester / Polyether-Blockcopolymere (z. B. Copolyester wie die aus Dimethylterephthalat, Poly(tetramethylenoxid)glykol und Tetramethylenglykol), Polycarbonat/Polydimethylsiloxan-Blockcopolymere und Polycarbonat/Polyether-Blockcopolymere.

Thermoplastische Elastomere, die nicht Blockcopolymere sind, sind in der Regel fein interdispergierte Mehrphasensysteme oder Legierungen und können ebenfalls verwendet werden, einschließlich Mischungen von Polypropylen mit Ethylen-Propylen-Kautschuke (EPR) oder Ethylen-Propylen-Dien-Monomer (EPDM)-Kautschuke.

In dieser Ausführungsform mit einem oder mehreren thermoplastischen Elastomeren enthält das expandierbare Material vorzugsweise ein oder mehrere nicht-elastomere Thermoplasten. Dabei wird der nicht-elastomere Thermoplast unter anderem ausgewählt, um die Hafteigenschaften und Verarbeitbarkeit der expandierbaren Zusammensetzung zu verbessern.

Im Allgemeinen wird es wünschenswert sein, einen nicht-elastomeren Thermoplasten einzusetzen, dessen Erweichungspunkt nicht höher als die Temperatur liegt, bei der das Treibmittel beginnt, aktiviert zu werden, vorzugsweise mindestens etwa 30 ° C niedriger als diese Temperatur.

Zu dem besonders bevorzugten nicht-elastomeren Thermoplasten gehören Olefinpolymere, insbesondere Copolymere von Olefinen (z. B. Ethylen) mit nicht-olefinischen Monomeren (z. B. Vinylester, wie Vinylacetat und Vinylpropionat, (Meth)acrylatester, wie C1 bis C6-Alkylester von Acrylsäure und Methacrylsäure). Ethylen / Vinylacetat-Copolymere (speziell Copolymere mit einen Anteil von etwa 16 bis etwa 35 Gew.-% Vinylacetat) und Ethylen / Methylacrylat-Copolymere (insbesondere Copolymere mit einem Anteil von etwa 15 bis etwa 35 Gew.-% Methylacrylat).

In bestimmten Ausgestaltungen dieser Ausführungsform beträgt das Gewichtsverhältnis von thermoplastischem Elastomer zu nicht-elastomeren Thermoplast mindestens 0,5:1 oder zumindest 1:1 und / oder nicht mehr als 5:1 oder 2,5:1.

Das klebrigmachende Harz kann innerhalb der Gruppe bestehend aus Kolophonium, Terpenharze, Terpenphenolharze, Kohlenwasserstoffharze aus gecrackten Erdöldestillaten stammten, aromatische klebrigmachende Harze, Tallöl, Ketonharze und Aldehydharze ausgewählt werden.Geeignete Kolophonium-Harze sind insbesondere aus Abietinsäure, Lävopimarsäure, Neoabietinsäure, Dextropimarsäure, Palustrinsäure, Alkylester der vorstehend genannten Harzsäuren und hydrierte Produkte von Harzsäurederivaten.

Beispiele für geeignete Weichmacher sind Alkylester zweibasiger Säuren (z. B. Phthalat-Ester), Diarylether, Benzoate von Polyalkylenglykolen, organische Phosphate und Alkylsulfonsäureester von Phenol oder Kresol.

Ein ganz besonders bevorzugter Gegenstand der Erfindung enthält neben dem Treibmittel in den thermisch expandierbare Zusammensetzungen als Bindemittelsystem mindestens ein peroxidisch vernetzbares Polymer und mindestens ein Peroxid als Härter.

Als peroxidisch vernetzbare Polymere kommen prinzipiell alle thermoplastischen Polymere und thermoplastischen Elastomere in Frage, die sich peroxidisch vernetzen lassen. Als "peroxidisch vernetzbar" bezeichnet der Fachmann derartige Polymere, bei denen durch Einwirkung eines radikalischen Starters ein Wasserstoffatom aus der Haupt- oder einer Nebenkette abstrahiert werden kann, so dass ein Radikal zurückbleibt, das in einem zweiten Reaktionsschritt andere Polymerketten angreift.

In einer bevorzugten Ausführungsform ist das mindestens eine peroxidisch vernetzbare Polymer ausgewählt aus Styrol-Butadien-Blockcopolymeren, Styrol-Isopren-Blockcopolymeren, Ethylen-Vinylacetat-Copolymeren, funktionalisierten Ethylen-Vinylacetat-Copolymeren, funktionalisierten Ethylen-Butylacrylat-Copolymeren, Ethylen-Methylacrylat-Copolymeren, Ethylen-Ethylacrylat-Copolymeren, Ethylen-Butylacrylat-Copolymeren, Ethylen-(Meth)acrylsäure-Copolymeren, Ethylen-2-Ethylhexyacrylat-Colpolymeren, Ethylen-Acrylester-Copolymeren und Polyolefinen, wie beispielsweise Polyethylen oder Polypropylen.

Unter einem funktionalisierten Copolymeren wird dabei erfindungsgemäß ein Copolymer verstanden, das mit zusätzlichen Hydroxidgruppen, Carboxygruppen, Anhydridgruppen, Acrylatgruppen und/oder Glycidylmethacrylat-Gruppen versehen ist.

Besonders vorteilhaft im Sinne der vorliegenden Erfindung sind Ethylen-Vinylacteat-Copolymere, funktionalisierte Ethylen-Vinylacetat-Copolymere, funktionalisierte Ethylen-Butylacrylat-Copolymere, Ethylen-Propylen-Dien-Copolymere, Styrol-Butadien-Blockcopolymere, Styrol-Isopren-Blockcopolymere, Ethylen-Methylacrylat-Copolymere, Ethylen-Ethylacrylat-Copolymere, Ethylen-Butylacrylat-Copolymere und Ethylen-(Meth)acrylsäure-Copolymere.

Besonders gute Haftungseigenschaften insbesondere auf geöltem Blech können erzielt werden, wenn erfindungsgemäße thermisch härtbare Zubereitungen eingesetzt werden, die ein oder mehrere Ethylen-Vinylacetat-Copolymere als alleinige peroxidisch härtbare Polymere enthalten, das heißt, dass die thermisch härtbaren Zubereitungen außer den Ethylen-Vinylacetat-Copolymeren im Wesentlichen frei sind von weiteren peroxidisch härtbaren Polymeren.

Thermisch expandierbare Zubereitungen sind erfindungsgemäß "im Wesentlichen frei von weiteren peroxidisch härtbaren Polymeren", wenn sie weniger als 3 Gew.-%, vorzugsweise weniger als 1,5 Gew.-%, ganz besonders bevorzugt weniger als 0,5 Gew.-% eines peroxidisch vernetzbaren Polymeren enthalten, das kein Ethylen-Vinylacetat-Copolymer ist.

Thermisch expandierbare Zubereitungen, die mindestens ein Ethylen-Vinylacetat-Copolymer mit einem Vinylacetatanteil von 9 bis 30 Gew.-%, insbesondere von 15 bis 20 Gew.-%, ganz besonders von 17,5 bis 19 Gew.-%, bezogen auf die Gesamtmasse des Copolymeren, enthalten, sind erfindungsgemäß besonders bevorzugt.

Weiterhin hat es sich als vorteilhaft erwiesen, wenn die thermisch expandierbare Zubereitung ein peroxidisch vernetzbares Polymer, insbesondere ein Ethylen-Vinylacetat-Copoylmer, mit einem Schmelzindex von 0,3 bis 400 g/10min, insbesondere von 0,5 bis 45 g/10min, enthält. Peroxidisch vernetzbare Polymere, insbesondere Ethylen-Vinylacetat-Copolymere, mit einem Schmelzindex von 1,5 bis 25 g/10min, insbesondere von 2 bis 10 g/10 min, ganz besonders von 2 bis 8 g/10min sind vorteilhaft. Es kann erfindungsgemäß vorteilhaft sein, wenn zwei oder mehrere Polymere mit verschiedenen Schmelzindices in den thermisch expandierbaren Zubereitungen eingesetzt werden.

Der Schmelzindex wird hierfür in einem Kapillarrheometer bestimmt, wobei das Polymer bei 190°C in einem beheizbaren Zylinder aufgeschmolzen und unter einem durch die Auflagelast (2,16kg) entstehenden Druck durch eine definierte Düse (Kapillare) gedrückt wird (ASTM D1238). Ermittelt wird die austretende Masse als Funktion der Zeit.

Die thermisch expandierbaren Zubereitungen enthalten vorzugsweise mindestens 30 Gew.-% mindestens eines peroxidisch vernetzbaren Polymeren. Thermisch expandierbare Zubereitungen, die 40 bis 90 Gew.-%, insbesondere 50 bis 80 Gew.-%, mindestens eines peroxidisch vernetzbaren Polymers jeweils bezogen auf die Gesamtmasse der thermisch expandierbaren Zubereitung enthalten, sind besonders bevorzugt.

Als weiteren Bestandteil neben den peroxidisch vernetzbaren Polymeren können die thermisch expandierbaren Zubereitungen vorzugsweise mindestens ein niedermolekulares multifunktionelles Acrylat enthalten

Unter einem "niedermolekularen multifunktionellen Acrylat" wird eine Verbindung verstanden, die mindestens zwei Acrylatgruppen aufweist und ein Molgewicht unterhalb von 2400g/mol, vorzugsweise unterhalb von 800g/mol, aufweist. Als vorteilhaft haben sich insbesondere derartige Verbindungen erwiesen, die zwei, drei oder mehr Acrylatgruppen pro Molekül aufweisen.

Bevorzugte difunktionelle Acrylate sind Ethylenglycol-Dimethacrylat, Diethylenglycol- Dimethacrylat, Triethlenglycol-Dimethacrylat, Triethlenglycol-Diacrylat, Tripropyleneglycol-Dimethacrylat, 1,4-Butandiol-Dimethacrylat, 1,3 Butylenglycol-Dimethacrylat, 1,3-Butandiol-Dimethacrylat, Tricyclodecandimethanol-Dimethacrylat, 1,10-Dodecandiol-Dimethacrylat, 1,6-Hexandiol-Dimethacrylat, 2-Methyl-1,8-octandiol-Dimethacrylat, 1,9-Nonandiol-Dimethacrylat, Neopentylglycol-Dimethacrylat und Polybutylenglycol-Dimethacrylat.

Bevorzugte niedermolekulare Acrylate mit drei oder mehr Acrylatgruppen sind Glycerintriacrylat, Dipentaerythritol-Hexaacrylat, Pentaerythritol-Triacrylat (PETA-3), Tetramethylolmethan- Tetraacrylat (TMMT), Trimethylolpropan-Triacrylat (TMPTA), Pentaerythritol-Trimethacrylat (PETMA-3), Di-(Trimethylolpropan)-Tetraacrylat (TMPA), Pentaerythritol-Tetraacrylat (PETA-4), TrimethylolpropanTrimethacrylat (TMPTMA), Tri(2-acryloxyethyl)isocyanurat und Tri(2- methacryloxyethyl)trimellitat sowie deren ethoxylierten und propoxylierten Derivate mit einem Gehalt von maximal 35-EO-Einheiten und/oder maximal 20-PO-Einheiten.

Thermisch expandierbare Zubereitung die ein niedermolekulares multifunktionelles Acrylat ausgewählt aus Triethylenglykoldiacrylat, Triethlenglycol-Dimethacrylat, Trimethylolpropantriacrylat (TMPTA) und Trimethylolpropantrimethacrylat (TMPTMA), Pentaerythritol-Triacrylat (PETA-3), Tetramethylolmethan- Tetraacrylat (TMMT), Pentaerythritol-Trimethacrylat, Di-(Trimethylolpropan)-Tetraacrylat (TMPA) und Pentaerythritol-Tetraacrylat (PETA-4) enthalten, sind erfindungsgemäß ganz besonders bevorzugt.

Neben den niedermolekularen Acrylaten können die thermisch expandierbaren Zubereitungen weitere Covernetzer, wie beispielsweise Allylverbindungen, wie Triallyl-cyanurat, Triallyl-isocyanurat, Triallyl-trimesat, Triallyl-trimellitat (TATM), Tetraallyl-pyromellitat, den Diallylester von 1,1,3-Trimethyl-5-carboxy-3-(4-carboxyphenyl)inden, Trimethylolpropan-trimellitat (TMPTM) oder Phenylen-dimaleimide enhtalten.

Dabei hat es sich als besonders vorteilhaft erwiesen, wenn die thermisch expandierbaren Zubereitungen mindestens ein niedermolekulares multifunktionelles Acrylat ausgewählt aus Triethylenglykoldiacrylat, Trimethylolpropantriacrylat (TMPTA) und Trimethylolpropantrimethacrylat (TMPTMA) enthalten.

Die niedermolekularen multifunktionellen Acrylate sind in den thermisch expandierbaren Zubereitungen vorzugsweise in einer Menge von 0,2 bis 2,5 Gew.-%, insbesondere von 0,4 bis 1,4 Gew.-%, jeweils bezogen auf die Gesamtmasse der thermisch expandierbaren Zubereitung enthalten.

Als Härtersystem für die peroxidisch vernetzbares Polymere enthalten die thermisch expandierbaren Zubereitungen bevorzugt mindestens ein Peroxid. Insbesondere sind die organischen Peroxide geeignet, wie beispielsweise Ketonperoxide, Diacylperoxide, Perester, Perketale und Hydroperoxide bevorzugt. Besonders bevorzugt sind beispielsweise Cumenhydroperoxid, t-Butylperoxid, Bis(tert-butylperoxy)-diisopropylbenzol, Di(tert-butylperoxyisopropyl)benzol, Dicumylperoxid, t-Butylperoxybenzoat, Di-alkylperoxydicarbonat, Diperoxyketale (z.B. 1,1-Di-tert-butylperoxy-3,3,5-trimethylcyclohexan), Ketonperoxide (z.B. Methylethylketon-Peroxide) und 4,4- Di-tert-butylperoxyn-butyl-valerate.

Besonders bevorzugt sind die beispielsweise die kommerziell von der Firma Akzo Nobel vertriebenen Peroxide, wie 3,3,5,7,7-Pentamethyl-1,2,4-trioxepan, 2,5-Dimethyl-2,5-di(tert-butylperoxy)hex-3-in, Di-tert-butylperoxid, 2,5-Dimethyl-2,5-di(tert-butylperoxy)hexan, tert-Butylcumylperoxid, Di(tert-butylperoxyisopropyl)benzol, Dicumylperoxid, Butyl-4,4-di(tert-butylperoxi)valerat, tert-Butylperoxy-2-ethylhexylcarbonat, 1,1-Di-(tert-butylperoxy)-3,3,5-trimethylcyclohexan, tert-Butylperoxybenzoat, Di-(4-methylbenzoyl)peroxid und Dibenzoylperoxid.

Es hat sich weiterhin als vorteilhaft erwiesen, wenn die eingesetzten Peroxide bei Raumtemperatur im Wesentlichen inert sind und erst bei Erhitzung auf höhere Temperaturen aktiviert werden (beispielsweise bei Erhitzung auf Temperaturen zwischen 130°C und 240°C). Besonders vorteilhaft ist es, wenn das eingesetzte Peroxid bei 65°C eine Halbwertszeit von mehr als 60 Minuten aufweist, das heißt, dass nach einer Erhitzung der thermisch expandierbaren Zubereitung enthaltend das Peroxid auf 65°C für 60 Minuten sich weniger als die Hälfte des eingesetzten Peroxids zersetzt hat. Erfindungsgemäß können solche Peroxide besonders bevorzugt sein, die bei 115°C eine Halbwertszeit von 60 Minuten aufweisen.

Besonders bevorzugt ist mindestens ein Peroxid ausgewählt aus der Gruppe aus Di(tert-butylperoxyisopropyl)benzol, Dicumylperoxid, 1,1-Di-(tert-butylperoxy)-3,3,5-trimethylcyclohexan, Dibenzoylperoxid und Di-tert-butyl- 1,1,4,4-tetramethylbut-2-in-1,4-ylendiperoxid enthalten.

Ferner ist es erfindungsgemäß vorteilhaft, wenn mindestens ein oder die Peroxide in einer auf einen festen inerten Träger, wie beispielsweise Calciumcarbonat und/oder Silica und/oder Kaolin, aufgebrachten Form eingesetzt werden.

Vorzugsweise wird das Peroxid so ausgewählt, dass die Vernetzungstemperatur T90 unterhalb, vorzugsweise 15 - 35 °C unterhalb der Zersetzungstemperatur des Treibmittels liegt. Dadurch werden eine hohe Gasausbeute und damit eine hohe Expansion des Materials begünstigt. Die Vernetzungstemperatur T90 definiert sich als die Temperatur, bei der eine 90%ige Vernetzung des Materials innerhalb von 12 Minuten erreicht wird.

Das mindestens eine oder die Peroxide sind in den erfindungsgemäßen thermisch expandierbaren Zubereitungen vorzugsweise in einer Menge von 0,2 bis 2 Gew.-%, insbesondere in einer Menge von 0,5 bis 1,3 Gew.-%, jeweils bestimmt als Aktivsubstanzgehalt an Peroxid bezogen auf die Gesamtmasse der thermisch expandierbaren Zubereitung, enthalten.

Weiterhin ist es von Vorteil, wenn das Massenverhältnis des mindestens einen Peroxids zu dem mindestens einen niedermolekularen multifunktionellen Acrylat mindestens 1:3 beträgt. Ein Massenverhältnis von mindestens 1:3 ist erfindungsgemäß immer dann erreicht, wenn die Formulierung bezogen auf 1g Peroxid höchstens 3g niedermolekulares multifunktionelles Acrylat enthält. Ein Massenverhältnis von mindestens 1:2,5, insbesondere von mindestens 1:1,6 ist besonders bevorzugt.

Durch die Wahl dieses Massenverhältnisses ist es erfindungsgemäß möglich, dass die Anbindung, das heißt Haftung am gegenüberliegenden Blech, verbessert wird. Es wurde gefunden, dass die erfindungsgemäßen thermisch expandierbaren Zubereitungen insbesondere in Engstellen des abzudichtenden Systems eine bessere Haftung aufweisen, da der Schaum selbst bis in kleinste Ecken und spitze Winkel vordringt und somit eine vollständigere Abdichtung des Systems ermöglicht.

Als weiteren Bestandteil umfasst die thermisch expandierbare Zusammensetzung mindestens einen Katalysator. Bei diesem Katalysator handelt es sich um ein Element oder eine Verbindung, die die Freisetzung von CO₂ katalysiert. Dies geschieht durch die Zersetzung des mindestens einen erfindungsgemäßen organischen Carbonates. Grundsätzlich sind alle im Stand der Technik bekannten Elemente und Verbindungen, die die Zersetzung von organischen Carbonaten katalysieren, für diesen Zweck geeignet. In einer bevorzugten Ausführungsform der vorliegenden Erfindung ist der mindestens eine Katalysator eine Lewis-Säure und/oder eine Bronsted-Säure.

"Lewis-Säure" und "Bronsted-Säure", wie hierin verwendet, beziehen sich auf die jeweils allgemeingültigen Bedeutungen dieser Begriffe. Eine Lewis-Säure ist ein Elektronenpaarakzeptor, der dazu im Stande ist, Elektronenpaare anzulagern. Eine Bronsted-Säure ist eine Verbindung, die dazu in der Lage ist, Protonen (H⁺) abzugeben. Hierbei können Bronsted-Säuren auch die Eigenschaft einer Lewis-Säure erfüllen und umgekehrt. Vorzugsweise ist der mindestens eine Katalysator ausgewählt aus der Gruppe bestehend aus Metallkomplexen, Metallsalzen, Mineralsäuren und deren Salzen sowie Carbonsäuren und deren Salzen.

Als Bronsted-Säure können alle im Stand der Technik bekannten Bronsted-Säuren eingesetzt werden, die für diesen Zweck geeignet sind. Hierzu zählen organische Säuren, wie beispielsweise Carbonsäuren und Mineralsäuren. "Carbonsäure", wie hierin verwendet, bezieht sich auf eine Verbindung, die mindestens eine Carboxygruppe (-C(=O)OH) tragen. Als Carbonsäure können alle im Stand der Technik bekannten Carbonsäuren eingesetzt werden, die für diesen Zweck geeignet sind. Hierzu zählen, ohne auf diese beschränkt zu sein, Ameisensäure, Essigsäure, Propionsäure, Butansäure, Acrylsäure, Ölsäure, Oxalsäure, Bernsteinsäure, Fumarsäure, Maleinsäure, Benzoesäure, Salicylsäure, Nicotinsäure, Citronensäure, sowie Zuckersäuren. "Mineralsäure", wie hierin verwendet, bezieht sich auf die allgemeingültige Bedeutung dieses Begriffs und umfasst beispielsweise die Säuren HCl, H₂SO₄, HNO₃ und H₃PO₄.

Als Lewis-Säure können alle im Stand der Technik bekannten Lewis-Säuren eingesetzt werden, die für diesen Zweck geeignet sind. Hierzu zählen, ohne auf sie beschränkt zu sein, BF₃, AlCl₃, SiCl₄, PF₅, PPh₃ und Salze der vorgenannten.

"Metallkomplexe", wie hierhin verwendet, bezieht sich auf Verbindungen mit mindestens einem Metallion, das von mindestens einem Liganden umgeben ist. Hierbei sind die Liganden entweder anorganisch oder organisch und tragen optional eine elektrische Ladung. Trägt der Ligand eine elektrische Ladung, so bildet dieser gemeinsam mit dem Metallion ein so genanntes "Metallsalz". Somit bilden Metallsalze eine Untergruppe der Metallkomplexe. Metallkomplexe weisen die Formel MₙXₘ auf, wobei M mindestens ein Metallion, X mindestens ein Ligand ist und m und n sind jeweils eine natürliche Zahl. Diese Metallionen sind vorzugsweise Ionen der Übergangsmetalle. Grundsätzlich sind alle Metalle, die im Stand der Technik bekannt und zu diesem Zweck geeignet sind, einsetzbar. Hierzu zählen, ohne auf diese beschränkt zu sein, Metalle jeglicher Ladung, wie K⁺, Na⁺, Li⁺, Cu⁺, Mg²⁺, Ca²⁺, Ba²⁺, Cu²⁺, Zn²⁺, Al³⁺ und Fe³⁺. Grundsätzlich sind alle Liganden, die im Stand der Technik bekannt und zu diesem Zweck geeignet sind, einsetzbar und können zur Neutralisation der Ladung des Metallions dienen. Zu diesen Liganden zählen, ohne auf diese beschränkt zu sein, einzähnige sowie mehrzähnige, so genannte chelatisierende, Liganden wie beispielsweise F⁻, Cl⁻, Br⁻, I⁻, SO₄²⁻, SO₃²⁻, Acetylaceton (acac), Ethylendiamin (en), Oxalat und Ethylendiamintetraessigsäure (EDTA). Vorzugsweise wird der Katalysator ausgewählt aus der Gruppe bestehend aus FeSO₄, Co(acac)₂, Cu(acac)₂, Zn(acac)₂ und Mischungen davon. Besonders bevorzugt wird ein Kupfer-haltiger Katalysator, insbesondere Cu(acac)₂ als Katalysator eingesetzt.

Besonders vorteilhaft ist eine Kombination aus einem organischen Carbonat der Formel (V) und/oder (VI) und einem Katalysator ausgewählt aus der Gruppe bestehend aus FeSO₄, Co(acac)₂, Zn(acac)₂ und Cu(acac)₂. Als äußerst vorteilhaft hat sich eine Mischung aus dem organischen Carbonat der Formel (VI) und Cu(acac)₂ erwiesen.

Neben den oben genannten Bestandteilen können die thermisch expandierbaren Massen noch weitere übliche Komponenten, wie beispielsweise Füllstoffe, Weichmacher, Reaktivverdünner, Rheologie-Hilfsmittel, Netzmittel, Haftvermittler, Alterungsschutzmittel, Stabilisatoren und/oder Farbpigmente enthalten.

Als Füllstoffe kommen beispielsweise die diversen gemahlenen oder gefällten Kreiden, Calcium-Magnesiumcarbonate, Talkum, Graphit, Schwerspat, Kieselsäuren oder Silica sowie insbesondere silikatische Füllstoffe, wie beispielsweise Glimmer, etwa in Form von Chlorit, oder silikatische Füllstoffe vom Typ des Aluminium-Magnesium-Calcium-Silicats, z. B. Wollastonit, in Frage. Talkum ist ein besonders bevorzugter Füllstoff. Bevorzugt sind die Füllstoffe beschichtet, vorzugsweise mit Stearinsäure oder Stearate. Dadurch wird das Rieselverhalten positiv beeinflusst.

Die Füllstoffe werden vorzugsweise in einer Menge von 0 bis 60 Gew.-%, insbesondere von 0 bis 50 Gew.-%, bevorzugt 0,1 bis 40 Gew.-%, besonders bevorzugt 1 bis 30 Gew.-% jeweils bezogen auf die Masse der gesamten thermisch expandierbaren Zusammensetzung eingesetzt.

Farbgebende Komponenten, insbesondere schwarze Farbstoffe auf Basis von Graphit und/oder Ruß, sind in den erfindungsgemäßen thermisch expandierbaren Zusammensetzungen vorzugsweise in einer Menge von 0 bis 2 Gew.-%, insbesondere von 0,1 bis 0,8 Gew.-%, ganz besonders bevorzugt 0,15 bis 0,4 Gew.-%, jeweils bezogen auf die Masse der gesamten thermisch expandierbaren Zusammensetzung enthalten.

Als Antioxidantien oder Stabilisatoren können beispielsweise sterisch gehinderte Phenole und/oder sterisch gehinderte Thioether und/oder sterisch gehinderte aromatische Amine eingesetzt werden, wie beispielsweise Bis-(3,3-bis-(4'-hydroxy-3-tert. butylphenyl) butansäure)-glykolester oder auch 4-Methylphenol, Reaktionsprodukt mit Dicyclopentadien und Isobutylen (Wingstay L)
Antioxidantien oder Stabilisatoren sind in den erfindungsgemäßen thermisch expandierbaren Zusammensetzungen vorzugsweise in einer Menge von 0 bis 0,5 Gew.-%, insbesondere von 0,1 bis 0,3 Gew.-%, jeweils bezogen auf die Masse der gesamten thermisch expandierbaren Zusammensetzung enthalten.

Reaktivverdünner für Epoxidharze sind Epoxygruppen enthaltende, niederviskose Substanzen (Glycidylether oder Glycidylester) mit aliphatischer oder aromatischer Struktur. Diese Reaktivverdünner können einerseits zur Viskositätserniedrigung des Bindemittel-Systems oberhalb des Erweichungspunktes dienen, andererseits können sie den Vorgelierungsprozess im Spritzguss steuern. Typische Beispiele für geeignete Reaktivverdünner sind Mono-, Di- oder Triglycidylether von C6- bis C14- Monoalkoholen oder Alkylphenolen sowie die Monoglycidylether des Cashewnuss-Schalenöls, Diglycidylether des Ethylenglycols, Diethylenglycols, Triethylenglycols, Tetraethylenglycols, Propylenglycols, Dipropylenglycols, Tripropylenglycols, Tetrapropylenglycols, 1 ,4-Butylenglycols, 1 ,5-Pentandiols, 1 ,6-Hexandiols, Cyclohexandimethanols, Triglycidylether des Trimethylolpropans sowie die Glycidylester von C6- bis C24- Carbonsäuren oder deren Mischungen.

Die erfindungsgemäßen thermisch expandierbaren Zusammensetzungen sind vorzugsweise derart formuliert, dass sie bei 22°C fest sind. Eine thermisch expandierbare Zusammensetzung wird erfindungsgemäß als "fest" bezeichnet, wenn die Geometrie dieser Zusammensetzung sich bei der angegebenen Temperatur innerhalb von 1 Stunde, insbesondere innerhalb von 24 Stunden, nicht unter dem Einfluss der Schwerkraft verformt.

Die erfindungsgemäßen thermisch expandierbaren Zusammensetzungen können durch Mischung der ausgewählten Komponenten in einem beliebigen, geeigneten Mischer, wie beispielsweise einem Kneter, einem Doppel-Z-Kneter, einem Innenmischer, einem Doppelschneckenmischer, einem kontinuierlichen Mischer oder einem Extruder, insbesondere einem Doppelschneckenextruder, hergestellt werden.

Obwohl es vorteilhaft sein kann die Komponenten etwas zu erhitzen, um die Erreichung einer homogenen, einheitlichen Masse zu erleichtern, muss dafür Sorge getragen werden, dass keine Temperaturen erreicht werden, die eine Aktivierung der Härter, der Beschleuniger und/oder des Treibmittels bewirken. Die resultierende thermisch expandierbare Zusammensetzung kann unmittelbar nach ihrer Herstellung in Form gebracht werden, beispielsweise durch Blasformen, Pelletierung, Spritzgussverfahren, Formpressverfahren, Stanzverfahren oder Extrusion.

Die Expansion der thermisch expandierbaren Zusammensetzung erfolgt durch Erhitzung, wobei die Zusammensetzung für eine bestimmte Zeit auf eine bestimmte Temperatur erhitzt wird, die ausreichend ist, um die Aktivierung des Treibmittels zu bewirken. Die Expansion erfolgt dabei Freisetzung von CO₂ aus den cyclischen Carbonaten. In Abhängigkeit von der Zusammensetzung der Zusammensetzung und den Bedingungen der Fertigungslinie liegen derartige Temperaturen üblicherweise im Bereich von 110 bis 240°C, vorzugsweise 120 bis 210°C, mit einer Verweilzeit von 10 bis 90 Minuten, vorzugsweise von 5 bis 60 Minuten.

Im Bereich des Fahrzeugbaus ist es besonders vorteilhaft, wenn die Expansion der erfindungsgemäßen Zusammensetzungen während der Passage des Fahrzeugs durch den Ofen zur Aushärtung der kathodischen Tauchlackierung erfolgt, so dass auf einen separaten Erhitzungsschritt verzichtet werden kann.

Die thermisch expandierbaren Zusammensetzungen der vorliegenden Erfindung können in einem weiten Bereich von Stütz-, Füll-, Dichtungs- und Klebstoffapplikationen zum Einsatz kommen, beispielsweise im Bereich der Schottteile zur Abdichtung von Hohlräumen in Fahrzeugen oder als Struktur-versteifende Formteile. Aber auch ein Einsatz als Unterfütterungsklebstoff, beispielsweise im Tür oder Dachbereich ist denkbar. Für einen derartigen Einsatzzweck können die erfindungsgemäßen thermisch expandierbaren Zusammensetzungen mittels Direktextrusion appliziert werden. Die Zusammensetzungen können aber auch in extrudierter Form an den Anwendungsort gebracht werden und dort durch Erwärmen des Stahls aufgepresst und angeschmolzen werden. Als dritte Alternative ist auch das Aufbringen als Co-Extrudat denkbar. Bei dieser Ausführungsform wird erfindungsgemäß unter das eigentliche nicht klebrige Formteil aus der erfindungsgemäßen thermisch expandierbaren Zusammensetzung eine zweite klebrige Zusammensetzung in einer dünnen Schicht aufgebracht. Diese zweite klebrige Schicht dient im Rahmen dieser Ausführungsform dazu, das Formteil im Rohbau zu fixieren.

Die thermisch expandierbaren Zusammensetzungen sind dementsprechend besonders für die Herstellung von Formkörpern, insbesondere Schotteilen zur Hohlraumabdichtung und/oder Struktur-versteifende Formteile geeignet, d.h. zur Herstellung von Teilen, die in die Hohlräume von Fahrzeugen eingesetzt werden, anschließend durch Erhitzung expandieren und gleichzeitig aushärten und auf diese Weise den Hohlraum möglichst vollständig abdichten und/oder verstärken.

In einem weiteren Aspekt richtet sich die vorliegende Erfindung dementsprechend auf einen Formkörper, der eine erfindungsgemäße thermisch expandierbare Zusammensetzung aufweist. Dabei kann es sich beispielsweise um ein Schottteil zum Abdichten von Hohlräumen eines Bauteils, das eine Form aufweist, die an den Hohlraum angepasst ist, oder um eine Strukturverstärkungsteil handeln.

Unter einer "Form, die an den Hohlraum angepasst ist" werden dabei erfindungsgemäß alle Geometrien von Schottteilen verstanden, die nach der Expansion eine vollständige Abdichtung des Hohlraums sicherstellen. Dabei kann die Form des Schottteils individuell der Form des Hohlraums nachempfunden sein und entsprechende Spitzen und/oder Rundungen aufweisen; im Falle der erfindungsgemäßen thermisch expandierbaren Zusammensetzungen mit hohen Expansionsgraden, kann aber auch das Einbringen einer entsprechend großen Menge in variabler Form, beispielsweise in Form einer Raupe oder eines abgelängten Strangs des Materials, in den Hohlraum ausreichen, um nach der Expansion eine vollständige Abdichtung des Hohlraums zu gewährleisten.

Derartige Schottteile werden aus den erfindungsgemäßen thermisch expandierbaren Zusammensetzungen üblicherweise durch Spritzgusstechniken hergestellt. Dabei werden die thermisch expandierbaren Zusammensetzungen auf Temperaturen im Bereich von 70 bis 120°C erhitzt und dann in eine entsprechend ausgebildete Form injiziert.

Die erfindungsgemäßen Formkörper können in allen Produkten zum Einsatz kommen, die Hohlräume aufweisen. Dies sind neben den Fahrzeugen beispielsweise auch Flugzeuge, Schienenfahrzeuge, Haushaltsgeräte, Möbel, Gebäude, Wände, Abtrennungen oder auch Boote. Ein weiterer Gegenstand der vorliegenden Erfindung ist ein Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung der hierin beschriebenen Zusammensetzungen und Formkörper. Vorzugsweise ist das Verfahren ein Verfahren zur Abdichtung von Hohlräumen eines Bauteils, wobei ein erfindungsgemäßes Schottteil in den Hohlraum eingebracht wird und anschließend auf eine Temperatur oberhalb von 30°, vorzugsweise von 50°C und 250°C, besonders bevorzugt 80°C und 160°C erhitzt wird, so dass die thermisch expandierbare Zusammensetzung expandiert und den Hohlraum abdichtet, füllt oder verstärkt.

Ein weiterer Gegenstand der vorliegenden Erfindung ist die Verwendung eines erfindungsgemäßen Formkörpers oder Schottteils zur akustischen Abdichtung von Hohlräumen in Bauteilen und/oder zur Abdichtung von Hohlräumen in Bauteilen gegen Wasser und/oder Feuchtigkeit.

Noch ein weiterer Gegenstand der vorliegenden Erfindung ist die Verwendung eines erfindungsgemäßen Formkörpers zum Verstärken oder Versteifen von Bauteilen, insbesondere hohlen Bauteilen.

Die nachfolgenden Beispiele sollen die Erfindung näher erläutern, wobei die Auswahl der Beispiele keine Beschränkung des Umfanges des Erfindungsgegenstandes darstellen soll. Bei den Zusammensetzungen sind alle Mengenangaben Gewichtsteile, wenn nicht anders angegeben.

### Ausführungsbeispiele

### Beispiel 1: Synthese von organischen Carbonaten aus Epoxiden und Kohlendioxid

Tetrabutylammoniumbromid, -chlorid und -iodid wurden von Acros erhalten. Die Epoxide D.E.R 331, und D.E.R.749 wurden von Dow Chemicals erhalten. Celloxide 2021P wurde von Daicel, und Prepo 2000LV von Henkel AG & Co KGaA erhalten.

Die Carbonate wurden unter Verwendung eines zweiteiligen 1 Liter Glasreaktors ausgestattet mit einem hohlen mechanischen Rührer und einem Thermometer hergestellt. Die Temperatur wurde durch das Verbinden des Thermometers mit einer Heizplatte konstant gehalten. Trockeneis (CO₂) wurde in einen anderen 1 Liter Rundkolben gegeben. Das freiwerdende Gas wurde durch einen Polyethylenschlauch über den hohlen Rührer in den Hauptreaktor eingeleitet. Das Epoxid wurde mit dem entsprechenden Katalysator (10 Gew.-% des Epoxids) in den Reaktor gegeben und unter ständigem Rühren bei 140°C erhitzt. In der Epoxidmischung waren Blasen zu beobachten.

Der 1 Liter Rundkolben wurde alle 4-5 h mit Trockeneis aufgefüllt. Nach 2-3 Tagen wurde die Mischung weiß und hochviskos. Zu diesem Zeitpunkt wurde die Reaktionsmischung abgekühlt.

| **TABELLE 1 : Synthese der Carbonate unter Verwendung von Tetrabutylammoniumhalogensalzen als Katalysatoren** | | | |
|---|---|---|---|
| | Ausbeute nach 1 Tag* | Ausbeute nach 2 Tagen* | Ausbeute nach 3 Tagen* |
| **Tetrabutylammonium bromid** | 77,8 % | ∼ 99 % | 100 % |
| **Tetrabutylammonium chlorid** | 94,0 % | 94 % | 94 % |
| **Tetrabutylammonium iodid** | 69,2 % | 90,9 % | 100 % |
| ***Epoxid: D.E.R 331: 2,2-bis-[4-(2,3-epoxypropoxy)phenyl]propan*/ *Kein Lösungsmittel*/ **Ausbeute aus ¹H NMR Messung berechnet.*** | | | |

| **TABELLE 2: Epoxidharze die als Ausgangsmaterialien für die Synthese von organischen Carbonaten verwendet wurden** | | | | |
|---|---|---|---|---|
| **Epoxid** | **Molekülstruktur** | **Form** | **EEW*** | **EGC**** |
| **D.E.R. 331** | Produkt aus Epichlorohydrin mit Bisphenol A | Flüssig | 182-192 | 5200-5500 |
| **Prepo 2000LV** | Präpolymer | Flüssig | | |
| **D.E.R. 749** | Produkt von Epichlorhydrin und Tetramethylolmethan (Pentaerythritol) | Flüssig | | |
| **Celloxide 2021P** | Doppelter Heterozyklus | flüssig | 128-145 | |

| | | | | |
|---|---|---|---|---|
| ****EEW: Epoxid Äquivalentgewicht (g*/*eq); **EGC: Epoxidgruppengehalt (mmol*/*kg)*** | | | | |

Die Synthese eines organischen Carbonats der Formel (V) ausgehend von D.E.R. 749 unter Verwendung von Tetrabutylammoniumchlorid als Synthesekatalysator sowie der Zerfallsmechanismus unter Verwendung von Cu(acac)₂ als Zerfallskatalysator sind in folgendem Schema gezeigt.

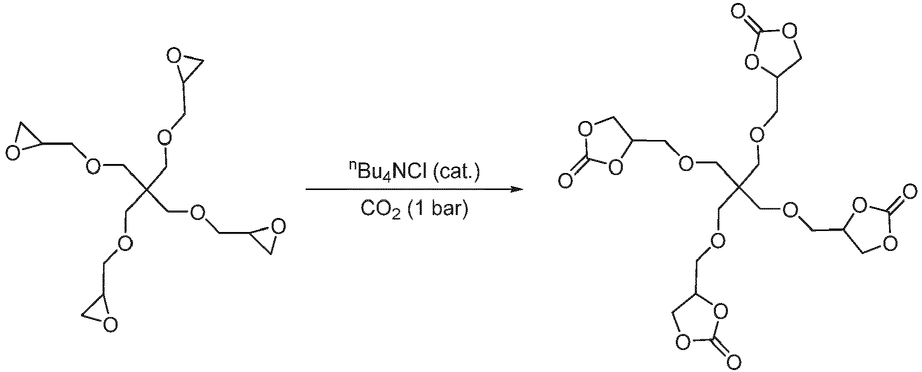

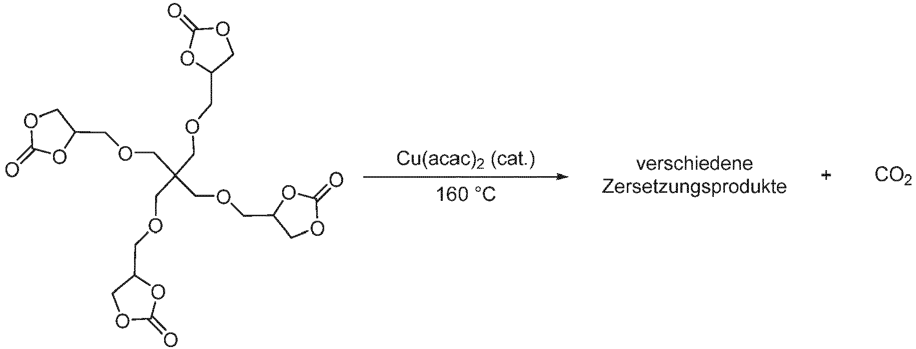

### Beispiel 2: Epoxid-basierte, wärmehärtbare Klebstoffe enthaltend die erfindungsgemäßen Treibmittel

### 1. Rezeptur

Kane Ace MX-125 (Bisphenol-A-diglycidylether + 25% Core Shell Partikel (Styrol-Butadien-Copolymer)) wurde von Kaneka, Cab-o-Sil TS 720 und Monarch 580 von Cabot erhalten. Super 40 wurde von Ulmer Weisskalk erhalten. 3M Glaskügelchen VS5500 wurden von 3M erhalten. Kevlar 1F1464 wurde von DuPont erhalten. Omyacarb 4HD wurde von Omya erhalten. Dyhard UR700 (3-Phenyl-1,1-dimethylurea) und Dyhard 100SH (Dicyandiamid) wurden von Alz chem erhalten.

| **TABELLE 3: Erste Rezeptur** | | |
|---|---|---|
| | **Verbindung** | **Gew.-%** |
| **1** | D.E.R. 331 | 11,78 %* |
| **1** | Kane Ace MX-125 | 23,56 %* |
| **1** | Prepo 2000LV | 15,26 %* |
| **2** | Cab-o-Sil TS 720 | 1,88 %* |
| **3** | Super 40 | 3,77 %* |
| **3** | 3M Glaskügelchen VS5500 | 13,95 %* |
| **4** | Kevlar 1F1464 | 1,88 %* |
| **4** | Omyacarb 4HD | 16,58 %* |
| **5** | Monarch 580 | 0,19 %* |
| **5** | Dyhard UR700 | 0,19 %* |
| **5** | Dyhard 100SH | 3,96 %* |
| **6** | Carbonat | 7,00 %* |
| **6** | Katalysator | ** |
| ***% des Gesamtgewichts / ** dieser Parameter ist variabel** | | |

Die Formulierung wurde durch schrittweises Mischen der Bestandteile wie durch die Nummerierung in Tabelle 3 angegeben erhalten. In einen Behälter, der an die gewünschten Mengen angepasst ist, wurden D.E.R. 331, Kane Ace MX-125 und Prepo 2000LV eingefüllt. Das Mischen wurde mit einem mechanischen Rührer (Typ MOLTENI/LABMAX P2 3/1 - 2001 gekoppelt mit einer MEMBRAN-VAKUMPUMPE /MD 4C 3,0 m³/h) durchgeführt. Die Mischung wurde für 15 Minuten unter Vakuum gemischt. Cab-o-Sil TS 720 wurde zugegeben und langsam bei atmosphärischem Druck gemischt, gefolgt von weiterem Mischen unter Vakuum. Nach 15 Minuten wurden die Super 40 und die 3M Glaskügelchen VS5500 mit derselben Vorgehensweise wie für Cab-o-Sil TS 700 zugegeben. Für die Schritte 4, 5 and 6 wurden die Verbindungen zu der Mischung gegeben und jeweils für 15 Minuten unter Vakuum eingemischt.

Der Gewichtsanteil des Katalysators wurde in Abhängigkeit von dem Carbonat (Molekulargewicht) und der erwarteten Reaktionsgeschwindigkeit variiert. Die erhaltene Mischung war eine schwarze, faserige Formulierung.

### 2. Rezeptur

Graphtol Rot LG wurde von Clariant erhalten.

| **TABELLE 4: Zweite Testrezeptur mit niedrigerer Viskosität und ohne Faserfüllstoffe** | | |
|---|---|---|
| | **Verbindung** | **Gew.-%** |
| **1** | D.E.R. 331 | 16,56 %* |
| **1** | Kane Ace MX-125 | 33,20 %* |
| **1** | Prepo 2000LV | 21,52 %* |
| **2** | Cab-o-Sil TS 720 | 2,64 %* |
| **5** | Graphtol ROT LG | 0,24 %* |
| **5** | Dyhard UR700 | 0,24 %* |
| **5** | Dyhard 100SH | 5,60 %* |
| **6** | Carbonat | 20,00%* |
| **6** | Katalysator | ** |
| ***% des Gesamtgewichts / ** dieser Parameter ist variabel** | | |

Die Rezeptur wurde schrittweise nach Tabelle 4 hergestellt. Ein Polypropylenbehälter wurde mit den ersten Verbindungen beladen. Die Mischung wurde für 1 Minute unter 0,2kpa mit 2000 r/min mit einem Mischer vom Typ THINKY PLATETARY Vakuummischer Aro 310 gemischt. Für die nächsten Schritte wurde dieselbe Vorgehensweise gewählt. Die erhaltene Mischung ist eine rote, pastenartige Formulierung.

Um die in Beispiel 1 erhaltenen organischen Carbonate zu analysieren, wurden Proben der oben erwähnten Rezepturen, die die entsprechenden Carbonate enthielten (siehe Tabelle 5) wärmegehärtet und die Expansion durch die Änderung der Dichte bestimmt. Zusätzlich wurde die Umwandlungsrate als Funktion des Massenverlusts aufgrund des Zerfalls des Carbonats untersucht. Die Dichte der vollständig gehärteten Referenzformulierung ohne Treibmittel wurde als 1.06 g / cm³ bestimmt.

| **TABELLE 5: Formulierungen mit Carbonaten** | | |
|---|---|---|
| **Carbonat synthetisiert über** | **Massenverlust** | **Dichte Härtung nach** |
| D.E.R. 331-Carbonat | 4,4 % | 0,72 |
| Prepo 2000LV-Carbonat | 5,0 % | 0,95 |
| D.E.R. 749-Carbonat | 1,9 % | 0,67 |
| Celloxide 2021P-Carbonat | 4,0 % | 0,84 |
| **Bedingungen: 5 Mol-% Cu(acac)₂ / Härtung bei 180°C über 20 Minuten** | | |

Die Formulierungen, die die niedrigste Dichte nach der Härtung aufweisen, sind die mit den besten Expansionsraten. Carbonate die aus D.E.R 331 und D.E.R 749 hergestellt wurden waren, die Carbonate, die für die erste Rezeptur die beste Expansion ergaben. Es ist ferner aus den Ergebnissen offensichtlich, dass die Expansion allein kein guter Indikator für ein wirksames Treibmittel ist, da Teile des gebildeten CO₂ aufgrund zu niedriger Viskositäten verloren gehen können. Das zeigt die Bedeutung der Feinabstimmung des Treibmittels in Bezug auf das erwartete Härtungsfenster, was für die organischen Carbonate einfach über die Auswahl unterschiedlicher Katalysatoren oder unterschiedlicher Katalysatormengen erreicht werden kann.

### Beispiel 3: Organische Carbonate als Treibmittel für vernetzbare Polyethylvinylacetate (EVA)

### Rezeptur mit EVA

Die beiden Polymere Alcudia EVA PA 538 und Elvaloy 4170 wurden von Repsol bzw. DuPont bezogen. Das Peroxid Peroxan HX 45P wurde von Pergan erhalten.

| **TABELLE 6: EVA Formulierung** | | |
|---|---|---|
| | **Verbindung** | **Gew.-%** |
| **1** | Alcudia EVA PA 538 | 69 %* |
| **1** | Elvaloy 4170 | 10 %* |
| **2** | Carbonat | 20 %* |
| **2** | Katalysator | ** |
| **3** | Peroxan HX 45P | 1 %* |
| ***% des Gesamtgewichts / ** dieser Parameter ist variabel** | | |

In einem Knetmischer wurden die beiden EVA Polymere bei 100°C für 20 Minuten gemischt. Nachdem die Mischung homogen war, wurde die Mischung auf 90°C gekühlt und langsam das Carbonat zugegeben. Die Zugabe erfolgte über 10 bis 120 Minuten (abhängig von der Viskosität des Carbonats). Nachdem das gesamte Carbonat zugegeben war, wurde die Mischung gemischt, bis sie homogen war. Danach wurde der Katalysator zugegeben und für 15 Minuten bei 90°C eingemischt. Die Mischung wurde dann abgekühlt und das Peroxan HX 45P zugegeben und für 5 Minuten bei 80°C gemischt. Die erhaltene Mischung ist typischerweise weiß (wenn der Katalysator farblos ist).

Diese Mischung wurde dann bei 80°C mit 5 kN für 15 Minuten gepresst und dann für weitere 15 Minuten bei 15°C. Es wurden Platten mit einer Dicke von 6mm erhalten.

Einige Katalysatoren wurden mit DSC untersucht und die, die die besten Expansionen in Epoxidformulierungen ergaben, wurden in der EVA Rezeptur mit dem D.E.R. 331 Carbonat weiter untersucht.

Eisen(II)sulfatheptahydrat wurde von Applichem erhalten. Cobalt(II)acetylacetonat, Kupfer(II)acetylacetonat und Zink(II)acetylacetonathydrat wurden von Sigma-Aldrich erhalten.

| **TABELLE 7: Expansionsformulierung mit Carbonat und Katalysator** | | | | |
|---|---|---|---|---|
| **Katalysator** | **Massen verlust** | **Dichte** | | **Volumen-expansion** |
| | | **vorher** | **nachher** | |
| Eisen(II)sulfatheptahydrat (FeSO₄ x 7H₂O) | -0,87 % | 0,9923 | 0,7809 | + 139,63% |
| Cobalt(II)acetylacetonat (Co(acac)₂) | -1,82 % | 0,987 | 0,5032 | + 197,49% |
| Kupfer(II)acetylacetonat (Cu(acac)₂) | -3,48 % | 0,996 | 0,2423 | + 420,58% |
| Zink(II)acetylacetonathydrat (Zn(acac)2 x H₂O) | -3,00 % | 0,9478 | 0,4274 | + 244,82% |
| **Treibmittel : Carbonat synthetisiert aus D.E.R. 331, mit 5 mol-% Katalysator Härtung bei 180°C für 20 Minuten** | | | | |

Kupfer(II)acetylacetonat (Cu(acac)₂) war der Katalysator, der die größte Volumenvergrößerung für das Carbonat aus D.E.R. 331 ergab, mit 420 % Expansion bei 180°C.

## Patentansprüche

1. Thermisch expandierbare Zusammensetzung, enthaltend
(1) mindestens eine organische Verbindung umfassend mindestens zwei cyclische Carbonatgruppen als chemisches Treibmittel,
(2) mindestens einen Katalysator für das Treibmittel,
(3) mindestens ein reaktives Bindemittel und
(4) mindestens einen Härter und/oder Beschleuniger,
wobei das reaktive Bindemittel vorzugsweise aus der Gruppe von Epoxiden, Kautschuken und peroxidisch vernetzbaren Polymeren ausgewählt wird.

2. Thermisch expandierbare Zusammensetzung nach Anspruch 1, **dadurch gekennzeichnet, dass** die mindestens eine als Treibmittel eingesetzte organische Verbindung ein Polyether und/oder Polyester, insbesondere Polyether ist, an welche mindestens zwei cyclische Carbonatgruppen gebunden sind.

3. Thermisch expandierbare Zusammensetzung nach Anspruch 1 oder 2, **dadurch gekennzeichnet, dass** die mindestens eine als Treibmittel eingesetzte organische Verbindung ein cyclisches organisches Carbonat der Formel (I) 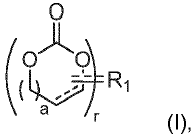 ist, wobei
------ eine Einfach- oder Doppelbindung, vorzugsweise eine Einfachbindung ist, wobei wenn der Ring eine Doppelbindung enthält, R₁ nicht über eine exo-Doppelbindung sondern über eine Einfachbindung gebunden ist und umgekehrt, und R₁ lineares oder verzweigtes, substituiertes oder unsubstituiertes Alkyl, lineares oder verzweigtes, substituiertes oder unsubstituiertes Heteroalkyl, lineares oder verzweigtes, substituiertes oder unsubstituiertes Alkenyl, lineares oder verzweigtes, substituiertes oder unsubstituiertes Alkinyl, substituiertes oder unsubstituiertes Cycloalkyl, substituiertes oder unsubstituiertes Aryl, oder-C(O)-R^{a}, wobei R^{a} lineares oder verzweigtes, substituiertes oder unsubstituiertes Alkyl, lineares oder verzweigtes, substituiertes oder unsubstituiertes Heteroalkyl, lineares oder verzweigtes, substituiertes oder unsubstituiertes Alkenyl, lineares oder verzweigtes, substituiertes oder unsubstituiertes Alkinyl, substituiertes oder unsubstituiertes Cycloalkyl, substituiertes oder unsubstituiertes Aryl ist, ist, vorzugsweise ein lineares oder verzweigtes, substituiertes oder unsubstituiertes Heteroalkyl, a eine ganze Zahl von 0 bis 5, vorzugsweise 0 oder 1 und besonders bevorzugt 0 ist und r eine natürliche Zahl von 2 bis 10, vorzugsweise 2 bis 4 ist.

4. Thermisch expandierbare Zusammensetzung nach einem der Ansprüche 1 bis 3, **dadurch gekennzeichnet, dass** die mindestens eine als Treibmittel eingesetzte organische Verbindung ein cyclisches organisches Carbonat der Formel (II) 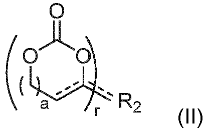 ist, wobei
------, a und r wie oben definiert sind und R₂ wie R₁ definiert ist.

5. Thermisch expandierbare Zusammensetzung nach einem der Ansprüche 1 bis 4, **dadurch gekennzeichnet, dass** die mindestens eine als Treibmittel eingesetzte organische Verbindung ein cyclisches organisches Carbonat der Formel (III) oder (IV) 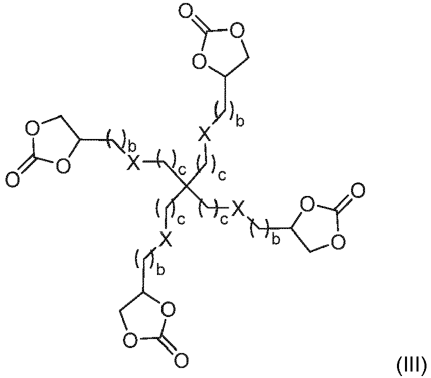 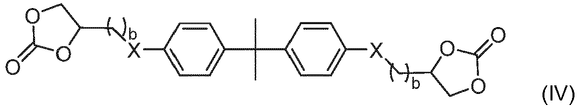 ist, wobei
jedes b und c jeweils unabhängig voneinander eine natürliche Zahl von 1 bis 5 vorzugsweise 1 oder 2 und besonders bevorzugt 1 ist, und
jedes X unabhängig ausgewählt ist aus der Gruppe bestehend aus O und S und vorzugsweise jedes X O ist.

6. Thermisch expandierbare Zusammensetzung nach einem der Ansprüche 1 bis 5, **dadurch gekennzeichnet, dass** die mindestens eine als Treibmittel eingesetzte organische Verbindung ein cyclisches organisches Carbonat der Formel (V) oder (VI) ist

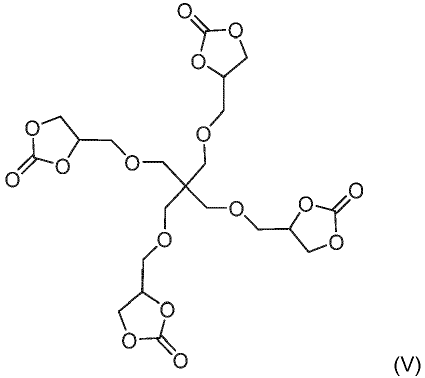

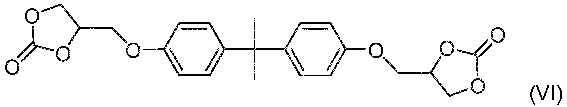

7. Thermisch expandierbare Zusammensetzung nach einem der Ansprüche 1 bis 6, **dadurch gekennzeichnet, dass** der mindestens eine Katalysator ausgewählt ist aus der Gruppe bestehend aus Lewis-Säuren, Bronsted-Säuren und Mischungen davon.

8. Thermisch expandierbare Zusammensetzung nach Anspruch 7, **dadurch gekennzeichnet, dass** der mindestens eine Katalysator ausgewählt ist aus der Gruppe bestehend aus Mineralsäuren und deren Salzen, Carbonsäuren und deren Salzen, Metallkomplexen, Metallsalzen, und Mischungen davon, vorzugsweise ausgewählt aus der Gruppe bestehend aus FeSO₄, Co(acac)₂, Cu(acac)₂, Zn(acac)₂ und Mischungen davon.

9. Thermisch expandierbare Zusammensetzung nach einem der Ansprüche 1 bis 8, **dadurch gekennzeichnet, dass** die thermische expandierbare Zusammensetzung bezogen auf das Gesamtgewicht 0,1 bis 40 Gew.-%, vorzugsweise 10 bis 30 Gew.-% und besonders bevorzugt 15 bis 25 Gew.-% des mindestens einen organischen Carbonats umfasst.

10. Formkörper, **dadurch gekennzeichnet, dass** der Formkörper eine thermisch expandierbare Zusammensetzung nach einem der Ansprüche 1 bis 9 aufweist.

11. Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung einer thermisch expandierbaren Zusammensetzung nach einem der Ansprüche 1 bis 9 oder einem Formkörper nach Anspruch 10.

12. Verfahren nach Anspruch 11 zum Abdichten und Füllen von Hohlräumen in Bauteilen, zum Verstärken oder Versteifen von Bauteilen, **dadurch gekennzeichnet, dass** ein Formkörper nach Anspruch 10 in ein Bauteil, insbesondere den Hohlraum eines Bauteils, eingebracht wird und anschließend auf eine Temperatur oberhalb von 30°C, vorzugsweise im Bereich von 50°C bis 250°C, besonders bevorzugt 80°C bis 160°C erhitzt wird, so dass die thermisch expandierbare Zusammensetzung expandiert und das Bauteil abdichtet, füllt, verstärkt oder versteift.

13. Verwendung eines Formkörpers nach Anspruch 10 zur akustischen Abdichtung von Hohlräumen in Bauteilen und/oder zur Abdichtung von Hohlräumen in Bauteilen gegen Wasser und/oder Feuchtigkeit oder zum Verstärken oder Versteifen von Bauteilen, insbesondere hohlen Bauteilen.

## Claims

1. A thermally expandable composition containing
(1) at least one organic compound comprising at least two cyclic carbonate groups as a chemical blowing agent,
(2) at least one catalyst for the blowing agent,
(3) at least one reactive binder and
(4) at least one curing agent and/or accelerator,
wherein the reactive binder is preferably selected from the group of epoxides, rubbers and peroxidically cross-linkable polymers.

2. The thermally expandable composition according to claim 1, **characterized in that** the at least one organic compound used as blowing agent is a polyether and/or polyester, in particular a polyether, to which at least two cyclic carbonate groups are bonded.

3. The thermally expandable composition according to claim 1 or 2, **characterized in that** the at least one organic compound used as blowing agent is a cyclic organic carbonate of formula (I) 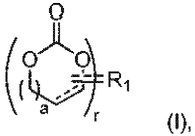 where
------ is a single bond or a double bond, preferably a single bond, where R₁ is not bonded by an exocyclic double bond when the ring contains a double bond, but rather by a single bond, and vice versa, and R₁ is a linear or branched, substituted or unsubstituted alkyl, a linear or branched, substituted or unsubstituted heteroalkyl, a linear or branched, substituted or unsubstituted alkenyl, a linear or branched, substituted or unsubstituted alkynyl, a substituted or unsubstituted cycloalkyl, a substituted or unsubstituted aryl, or -C(O)-R^{a}, where R^{a} is a linear or branched, substituted or unsubstituted alkyl, a linear or branched, substituted or unsubstituted heteroalkyl, a linear or branched, substituted or unsubstituted alkenyl, a linear or branched, substituted or unsubstituted alkynyl, a substituted or unsubstituted cycloalkyl, a substituted or unsubstituted aryl, preferably a linear or branched, substituted or unsubstituted heteroalkyl, a is an integer from 0 to 5, preferably 0 or 1 and particularly preferably 0, and r is a natural number from 2 to 10, preferably 2 to 4.

4. The thermally expandable composition according to one of claims 1 to 3, **characterized in that** the at least one organic compound used as blowing agent is a cyclic organic carbonate of formula (II) 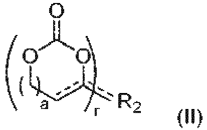 where
------, a and r are as defined above and R₂ is defined in the same way as R₁.

5. The thermally expandable composition according to one of claims 1 to 4, **characterized in that** the at least one organic compound used as blowing agent is a cyclic organic carbonate of formula (III) or (IV) 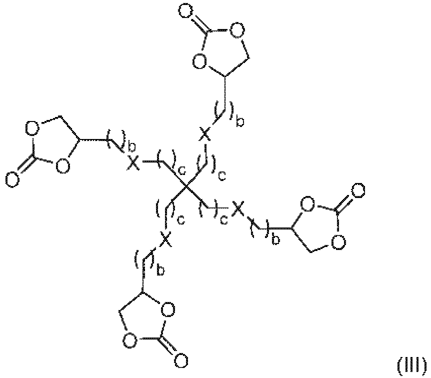 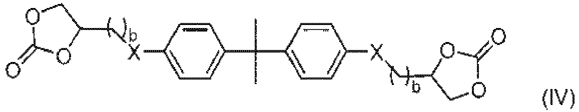 where
b and c are each, independently of one another, a natural number from 1 to 5, preferably 1 or 2 and particularly preferably 1, and each X is selected independently from the group consisting of O and S and each X is preferably O.

6. The thermally expandable composition according to one of claims 1 to 5, **characterized in that** the at least one organic compound used as blowing agent is a cyclic organic carbonate of formula (V) or (VI).

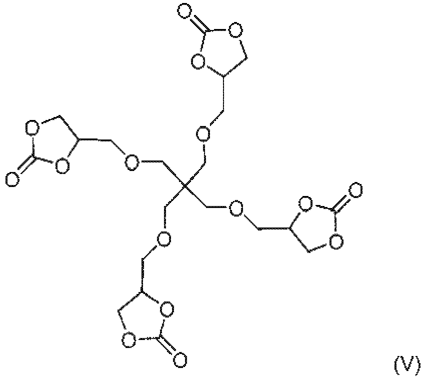

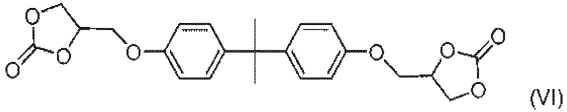

7. The thermally expandable composition according to one of claims 1 to 6, **characterized in that** the at least one catalyst is selected from the group consisting of Lewis acids, Bronsted acids and mixtures thereof.

8. The thermally expandable composition according to claim 7, **characterized in that** the at least one catalyst is selected from the group consisting of mineral acids and the salts thereof, carboxylic acids and the salts thereof, metal complexes, metal salts, and mixtures thereof, preferably selected from the group consisting of FeSO₄, Co(acac)₂, Cu(acac)₂, Zn(acac)₂ and mixtures thereof.

9. The thermally expandable composition according to one of claims 1 to 8, **characterized in that** the thermally expandable composition comprises, based on the total weight thereof, 0.1 to 40 wt.%, preferably 10 to 30 wt.% and particularly preferably 15 to 25 wt.% of the at least one organic carbonate.

10. A shaped body, **characterized in that** the shaped body has a thermally expandable composition according to one of claims 1 to 9.

11. A method for sealing and filling cavities in components, for strengthening or stiffening components, in particular hollow components, and for bonding movable components, using a thermally expandable composition according to one of claims 1 to 9 or a shaped body according to claim 10.

12. The method according to claim 11 for sealing and filling cavities in components and for strengthening or stiffening components, **characterized in that** a shaped body according to claim 10 is inserted into a component, in particular into the cavity of a component, and is then heated to a temperature of above 30 °C, preferably to a temperature in the range of from 50 °C to 250 °C, particularly preferably from 80 °C to 160 °C, such that the thermally expandable composition expands and seals, fills, strengthens or stiffens the component.

13. The use of a shaped body according to claim 10 for acoustically sealing cavities in components and/or for sealing cavities in components against water and/or moisture, or for strengthening or stiffening components, in particular hollow components.

## Revendications

1. Composition thermo-expansible contenant
(1) au moins un composé organique comprenant au moins deux groupes carbonate cycliques comme propulseur chimique,
(2) au moins un catalyseur pour l'agent propulseur,
(3) au moins un agent de liaison réactif, et
(4) au moins un durcisseur et/ou accélérateur,
dans laquelle l'agent de liaison réactif est de préférence choisi dans le groupe constitué des époxydes, des caoutchoucs et des polymères réticulables au peroxyde.

2. Composition thermo-expansible selon la revendication 1, **caractérisée en ce que** l'au moins un composé organique utilisé comme agent propulseur est un polyéther et/ou un polyester, en particulier un polyéther, auquel sont liés au moins deux groupes carbonate cycliques.

3. Composition thermo-expansible selon la revendication 1 ou 2, **caractérisée en ce que** l'au moins un composé organique utilisé comme agent propulseur est un carbonate organique cyclique de formule (I) 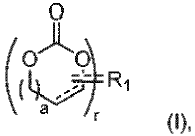 dans laquelle
------ est une simple liaison ou une double liaison, de préférence une simple liaison, où, lorsque le cycle contient une double liaison, R₁ n'est pas lié par une double liaison exo, mais par une simple liaison et inversement, et R₁ est un alkyle linéaire ou ramifié, substitué ou non substitué, linéaire ou ramifié, un hétéroalkyle, linéaire ou ramifié, substitué ou non substitué, un alcényle substitué ou non substitué, linéaire ou ramifié, un alcynyle linéaire ou ramifié, substitué ou non substitué, un cycloalkyle substitué ou non substitué, un aryle substitué ou non substitué, ou -C(O)-R^{a}, R^{a} étant un alkyle linéaire ou ramifié, substitué ou non substitué, un hétéroalkyle linéaire ou ramifié, substitué ou non substitué, un alcényle linéaire ou ramifié, substitué ou non substitué, un alcynyle linéaire ou ramifié, substitué ou non substitué, un cycloalkyle substitué ou non substitué, un aryle substitué ou non substitué, de préférence un hétéroalkyle linéaire ou ramifié, substitué ou non substitué, a étant un nombre entier compris entre 0 et 5, de préférence 0 ou 1 et de manière davantage préférée 0, et r étant un nombre naturel compris entre 2 et 10, de préférence entre 2 et 4.

4. Composition thermo-expansible selon l'une des revendications 1 à 3, **caractérisée en ce que** l'au moins un composé organique utilisé comme agent propulseur est un carbonate organique cyclique de formule (II) 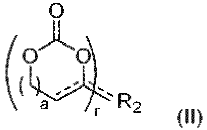 dans laquelle
------, a et r sont tels que définis ci-dessus et R₂ est défini de la même façon que R₁.

5. Composition thermo-expansible selon l'une des revendications 1 à 4, **caractérisée en ce que** l'au moins un composé organique utilisé comme agent propulseur est un carbonate organique cyclique de formule (III) ou (IV) 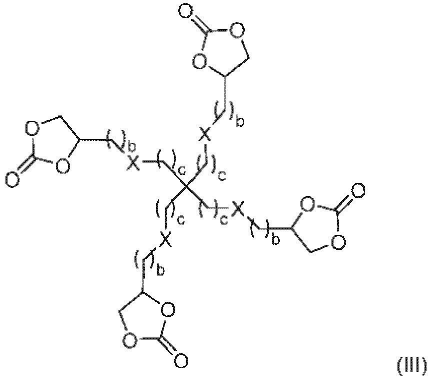 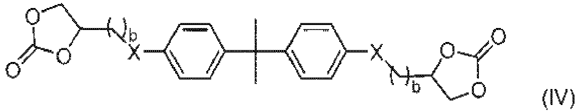 dans laquelle
chaque b et c sont chacun indépendamment un nombre naturel compris entre 1 et 5, de préférence 1 ou 2, et de manière davantage préférée 1, et chaque X est choisi indépendamment dans le groupe constitué de O et S, et chaque X étant de préférence O.

6. Composition thermo-expansible selon l'une des revendications 1 à 5, **caractérisée en ce que** l'au moins un composé organique utilisé comme agent propulseur est un carbonate organique cyclique de formule (V) ou (VI)

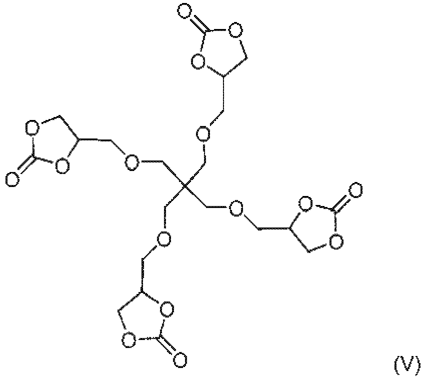

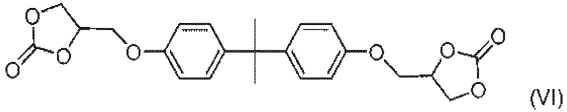

7. Composition thermo-expansible selon l'une des revendications 1 à 6, **caractérisée en ce que** l'au moins un catalyseur est choisi dans le groupe constitué des acides de Lewis, des acides de Bronsted et de leurs mélanges.

8. Composition thermo-expansible selon la revendication 7, **caractérisée en ce que** l'au moins un catalyseur est choisi dans le groupe constitué des acides minéraux et de leurs sels, des acides carboxyliques et de leurs sels, des complexes métalliques, des sels métalliques et de leurs mélanges, de préférence dans le groupe constitué de FeSO₄, Co(acac)₂, Cu(acac)₂, Zn(acac)₂ et de leurs mélanges.

9. Composition thermo-expansible selon l'une des revendications 1 à 8, **caractérisée** en cequ'elle comprend, par rapport à son poids total, 0,1 à 40 % en poids, de préférence 10 à 30 % en poids et de manière davantage préférée 15 à 25 % en poids de l'au moins un carbonate organique.

10. Corps façonné, **caractérisé en ce qu'**il présente une composition thermo-expansible selon l'une des revendications 1 à 9.

11. Procédé pour rendre étanches et remplir des cavités dans des composants, pour renforcer ou rigidifier des composants, en particulier des composants creux, et pour coller des composants mobiles en utilisant une composition thermo-expansible selon l'une des revendications 1 à 9 ou un corps façonné selon la revendication 10.

12. Procédé selon la revendication 11, permettant de rendre étanches et remplir des cavités dans des composants, de renforcer ou rigidifier des composants, **caractérisé en ce qu'**un corps façonné selon la revendication 10 est introduit dans un composant, en particulier dans la cavité d'un composant, puis chauffé à une température supérieure à 30 °C, de préférence dans la plage de 50 à 250 °C, de manière davantage préférée de 80 à 160 °C, de sorte que la composition thermo-expansible se dilate et rende étanche, remplit, renforce ou rigidifie le composant.

13. Utilisation d'un corps façonné selon la revendication 10, pour rendre acoustiquement étanches des cavités dans des composants et/ou pour rendre étanches, contre l'eau et/ou l'humidité, des cavités dans des composants, ou pour renforcer ou rigidifier des composants, en particulier des composants creux.
